# FASCICULE DE BREVET EUROPEEN

(11) **EP 1 415 283 B1**
(45) Date de publication et mention de la délivrance du brevet: **15.02.2006**
(21) Numéro de dépôt: 02772450.9
(22) Date de dépôt: 24.07.2002
(51) Int. Cl.: G07F 7/08, G07F 19/00

(54) **PROCEDE ET SYSTEME PERMETTANT DE GARANTIR FORMELLEMENT UN PAIEMENT, EN METTANT EN OEUVRE UN TELEPHONE PORTABLE**
VERFAHREN UND SYSTEM ZUR FORMALEN GARANTIE, MITTELS EINES MOBILTELEFONS, FÜR EINE BEZAHLUNG
METHOD AND SYSTEM FOR FORMAL GUARANTEE OF A PAYMENT, USING A PORTABLE TELEPHONE

(30) Priorité: 25.07.2001 FR 0109903; 25.07.2001 FR 0109904
(43) Date de publication de la demande: 06.05.2004
(73) Titulaire: Credit Lyonnais, 69002 Lyon (FR)
(72) Inventeur: ASSUERUS, Frédéric, F-78955 Carrières sous Poissy (FR); BERGSTEN, Ulrik, F-94210 La Varenne (FR)
(74) Mandataire: Grynwald, Albert
(86) Numéro de dépôt international: PCT/FR2002/002658
(87) Numéro de publication internationale: WO 2003/010721

(56) Documents cités:
- EP-A- 1 061 484
- WO-A-00/17794
- WO-A-01/39085
- US-A- 6 016 476

## Description

### Domaine concerné, problème posé

La présente invention concerne un procédé et un système destiné à permettre à un utilisateur, disposant d'un objet portable et d'un terminal mobile ayant une fonction de téléphonie, d'effectuer un paiement à distance auprès d'un accepteur, sans risque de répudiation de la part de l'utilisateur.

### Art antérieur

L'état antérieur de la technique est représenté par les documents WO-A-01 39085, WO-A-00 17794 et EP-A-1 061 484.

### Solution

### Procédé

L'invention selon la revendication 1 concerne un procédé destiné à permettre à un utilisateur, disposant d'un objet portable et d'un terminal mobile ayant une fonction de téléphonie, d'effectuer un paiement à distance auprès d'un accepteur. L'objet portable se présente notamment sous la forme d'une carte bancaire. Le procédé comprend un mode avancé comportant trois phases :
- une phase d'enregistrement
- un processus de demande et de délivrance de certificat
- une phase de paiement.

On décrira ci-après chacune des trois phases :

### (a) La phase d'enregistrement

Lors d'une phase d'enregistrement d'un utilisateur auprès d'un organisme, notamment un organisme bancaire le procédé comprend 1'étape, pour l'utilisateur, d'accoupler l'objet portable à un terminal, notamment de type distributeur automatique de billets (DAB-GAB) ou de type terminal de paiement électronique (TPE).

le terminal est connecté de manière directe ou indirecte à un serveur associé à une base de données de l'organisme.

le procédé comprend en outre, lors de la phase d'enregistrement :
- l'étape, pour l'utilisateur, sur requête du terminal, d'entrer dans le terminal des données d'authentification de l'utilisateur, notamment un code confidentiel et/ou des données bio-métriques, associées à l'objet portable,
- l'étape, pour le terminal, de vérifier que les données d'authentification de l'utilisateur, correspondent à l'objet portable.

Il résulte de la combinaison des traits techniques que la phase d'enregistrement permet d'authentifier l'objet portable et de vérifier que l'utilisateur est bien le titulaire de l'objet portable.

le procédé comprend en outre :
- l'étape, pour le terminal, de lire dans l'objet portable et de transmettre au serveur des données d'identification, notamment le numéro et la date d'expiration de l'objet portable ainsi que le nom et le prénom du titulaire de l'objet portable,
- l'étape, pour l'utilisateur, sur requête du terminal, de composer, au moyen d'un clavier du terminal, le numéro d'appel associé au terminal mobile.

le numéro d'appel associé au terminal mobile est transmis, par le terminal, au serveur. le procédé comprend en outre l'étape, pour le terminal, de transmettre un mot de passe à l'utilisateur, notamment en affichant le mot de passe sur un écran du terminal et/ou en délivrant à l'utilisateur un ticket sur lequel est imprimé le mot de passe. le mot de passe a été déterminé par le serveur et transmis au terminal. Il résulte de la combinaison des traits techniques que le mot de passe attribué par le serveur ne peut être transmis qu'à l'utilisateur titulaire de l'objet portable authentifié. le procédé comprend en outre, lors de la phase d'enregistrement, l'étape, pour le serveur, de mémoriser et d'associer dans la base de données de l'organisme les données d'identification, le numéro d'appel associé au terminal mobile, et le mot de passe.

Dans le cas de certaines variantes de réalisation la phase d'enregistrement peut être complétée par une étape au cours de laquelle l'utilisateur signe une demande d'enregistrement confirmant ainsi qu'il accepte des droits obligations du processus de paiement en toute confiance.

### (b) Le processus de demande, de production et de délivrance d'un certificat

Le processus de demande, de production et de délivrance d'un certificat comporte une phase préalable

### (b1) Phase préalable

Le terminal mobile doit comporter une carte SIM personnalisée par un opérateur de téléphonie mobile. la carte SIM est associée au numéro d'appel du terminal mobile.

On entend par carte SIM tout moyen ajouté au terminal mobile sous contrôle de l'opérateur de téléphonie mobile et qui sert à reconnaître l'utilisateur aussi bien pour la fonction de téléphonie que pour des fonctions mettant en oeuvre une authentification et/ou un signature électronique vis-à-vis de différentes application au delà des fonctions de téléphonie.
la carte SIM contient :
- une clé privée de signature associée à une clé publique de signature,
- un mot de passe de signature.

le mot de passe de signature est soit un mot de passe de signature d'origine que l'opérateur de téléphonie a déterminé et transmis à l'utilisateur, soit un nouveau mot de passe de signature que l'utilisateur a substitué au mot de passe de signature d'origine.

La carte SIM comprend en outre :
- des fonctions cryptographiques,
- une application de demande de certificat comportant un mécanisme de signature mettant en oeuvre la clé privée de signature,
- une application de paiement,

L'organisme dispose de la clé publique de signature.

L'organisme est par conséquent capable d'établir un lien entre le numéro d'appel et la clé publique de signature.

### (b2) Phase de demande d'un certificat

Le procédé comprend en outre, pour permettre à l'utilisateur de demander et d'obtenir un certificat auprès de l'organisme considéré, l'étape, pour l'utilisateur, de transmettre une demande de certificat à cet organisme :
- en actionnant l'application de demande de certificat de la carte SIM,
- en saisissant sur le clavier du terminal mobile le mot de passe,
- en structurant, au moyen de l'application de demande de certificat, un message, notamment de type SMS, contenant le numéro d'appel et le mot de passe,
- en saisissant sur le clavier du terminal mobile un mot de passe de signature.

le mot de passe de signature ainsi saisi est comparé avec le mot de passe de signature de la carte SIM. le mot de passe de signature active le mécanisme de signature :
- pour produire une signature, et
- pour produire un message signé composé du message et de la signature ainsi produite, en mettant en oeuvre la clé privée de signature, et
- pour transmettre le message signé à l'organisme considéré.

Le procédé comprend en outre, pour l'organisme considéré, les étapes suivantes :
- l'étape de vérifier que le numéro d'appel et le mot de passe ainsi transmis ont bien été mémorisés lors de la phase d'enregistrement et sont associés dans la base de données de l'organisme,
- l'étape d'extraire, de la base de données, les données d'identification, correspondant au numéro d'appel et au mot de passe, notamment le numéro et la date d'expiration de l'objet portable ainsi que le nom et le prénom du titulaire de l'objet portable,
- l'étape de rechercher la clé publique de signature associée audit numéro d'appel,
- l'étape de vérifier la signature au moyen de la clé publique de signature.

L'établissement du certificat est en principe demandé à une autorité de certification. Dans le cas de certaines variantes de réalisation l'autorité de certification peut avoir mandaté l'organisme considéré, notamment un organisme bancaire pour procéder à l'établissement et à la délivrance du certificat.

### (b3) Phase de production et de délivrance du certificat

Le procédé comprend en outre :
- l'étape de fabriquer un certificat en utilisant notamment le numéro d'appel, tout ou partie des données d'identification et la clé publique de signature,
- l'étape de mémoriser et d'associer avec le numéro d'appel et le mot de passe, dans la base de données de l'organisme, le certificat et une référence de certificat dudit certificat,
- l'étape de transmettre audit terminal mobile, en réponse à la demande de certificat, la référence de certificat et une requête d'activation de l'application de demande de certificat,
- l'étape, pour le terminal mobile, d'activer l'application de demande de certificat,
- l'étape, pour l'application de demande de certificat, de mémoriser la référence de certificat dans la carte SIM.

### (c) La phase de paiement

Le procédé comprend en outre lors d'une phase de paiement :
- l'étape, pour l'utilisateur, de transmettre à l'accepteur le numéro d'appel associé au terminal mobile,
- l'étape, pour l'accepteur, de transmettre à l'organisme le numéro d'appel associé au terminal mobile ainsi que des informations relatives au paiement, dont le montant du paiement,
- l'étape, pour l'organisme d'adresser au terminal mobile de l'utilisateur un message de demande de paiement, notamment de type SMS, en utilisant le numéro d'appel associé au terminal mobile.

Le message comprend :
- les informations relatives au paiement,
- une requête d'activation de l'application de paiement.

Le procédé comprend en outre:
- l'étape, pour le terminal mobile, d'activer l'application de paiement,
- l'étape, pour l'application de paiement ainsi activée d'afficher les informations relatives au paiement ainsi que les références de certificat mémorisées dans la carte SIM,
- l'étape, pour l'utilisateur, de sélectionner, au moyen du clavier du terminal mobile, en cas de choix multiples, une référence de certificat à utiliser pour effectuer le paiement,
- l'étape, pour l'application de paiement, d'afficher un champ de saisie du mot de passe de signature,
- l'étape, pour l'utilisateur, de donner son accord concernant le paiement en saisissant le mot de passe de signature, dans le champ de saisie, au moyen du clavier du terminal mobile,
- l'étape, pour l'application de paiement, de contrôler le mot de passe de signature ainsi saisi en le comparant avec le mot de passe de signature de la carte SIM,
- l'étape, pour l'application de paiement :
   - (i) de structurer un message de paiement, notamment de type SMS, contenant la référence de certificat et des données de paiement, au moins en partie constituées à partir des informations relatives au paiement, notamment le montant du paiement, la date du paiement, une référence de transaction, une identification de l'accepteur,
   - (ii) de signer le message de paiement, en mettant en oeuvre la clé privée de signature,
   - (iii) de produire un message de paiement signé composé du message de paiement et de la signature ainsi obtenue, et ,
   - (iv) de renvoyer à l'organisme le message de paiement signé ainsi produit.

Le procédé comprend en outre:
- l'étape, pour l'organisme, d'extraire de la base de données, le certificat et tout ou partie des données d'identification, notamment le numéro et la date d'expiration de l'objet portable, correspondant au numéro d'appel associé au terminal mobile et à la référence de certificat,
- l'étape, pour ledit organisme, de vérifier la signature du message de paiement signé en mettant en oeuvre la clé publique de signature du certificat,
- l'étape, pour l'organisme, de vérifier que le certificat correspond à l'utilisateur a transmis audit accepteur le numéro d'appel associé au terminal mobile et de vérifier que le message de paiement signé ainsi renvoyé correspond au message de demande de paiement,
- l'étape, pour l'organisme :
   - de faire débiter ou débiter un compte bancaire associé à l'objet portable du montant du paiement et de faire créditer ou créditer l'accepteur du montant,
   - de confirmer auprès de l'accepteur le paiement à distance de l'utilisateur.

Ainsi le paiements est acquitté à distance par l'utilisateur sans qu'il ait eu à communiquer à l'accepteur les données d'identification de l'objet portable, notamment le numéro et de la date d'expiration de la carte bancaire de l'utilisateur.

On obtient ainsi une signature électronique qualifiée avec un enchaînement dé preuves successives : le paiement est signé par le certificat, la demande de certificat est signée par la carte SIM avec authentification du client par son mot de passe, et la demande d'enregistrement est signée par la puce de la carte bancaire du client. La (ou les) organismes, notamment les banques, gérant le mode avancé peuvent donc garantir formellement le paiement vis à vis du commerçant.

De préférence, le procédé comprend, outre le mode avancé, un mode de base et un processus de sélection automatique du mode approprié. La phase d'enregistrement du mode de base est identique à la phase d'enregistrement du mode avancé. le processus de sélection automatique comprend l'étape de déterminer si le paiement peut être effectué selon le mode avancé ou s'il doit être effectué selon le mode de base. la détermination peut être effectuée au cours de la phase de paiement (c) et/ou au cours du processus de demande et de délivrance de certificat (b). dans le cas où le paiement ne peut pas être effectué selon le mode avancé, les étapes du processus de demande de délivrance de certificat (b) et les étapes du processus de la phase de paiement (c) du mode avancé sont substituées par les étapes ci-après décrites du mode de base, lors de la phase de paiement.

Le procédé comprend :
- l'étape, pour l'utilisateur, de transmettre à l'accepteur le numéro d'appel associé au terminal mobile.
- l'étape, pour l'accepteur, de transmettre à l'organisme le numéro d'appel associé au terminal mobile ainsi que des informations relatives au paiement, dont le montant du paiement,
- l'étape, pour l'organisme d'adresser à l'utilisateur un message, notamment de type SMS, en utilisant le numéro d'appel associé au terminal mobile.

le message comprend des informations relatives au paiement et une requête de saisie du mot de passe, se présentant notamment sous la forme d'un champ de saisie dans le message.

Le procédé comprend en outre :
- l'étape, pour l'utilisateur, de transmettre en retour le mot de passe à l'organisme, notamment en saisissant le mot de passe dans le champ de saisie,
- l'étape, pour l'organisme, de vérifier dans la base de données que le mot de passe, transmis par l'utilisateur, correspond au numéro d'appel associé au terminal mobile transmis par l'accepteur,
- l'étape, pour l'organisme :
   - de rechercher, dans la base de données, tout ou partie des données d'identification, notamment le numéro et la date d'expiration de l'objet portable, correspondant au numéro d'appel associé au terminal mobile et au mot de passe,
   - de faire débiter ou débiter un compte bancaire associé à l'objet portable du montant du paiement et de faire créditer ou créditer le accepteur du montant,
   - de confirmer auprès de l'accepteur le paiement à distance de l'utilisateur.

Il résulte de la combinaison des traits techniques que le paiement est acquitté à distance par l'utilisateur sans qu'il ait eu à communiquer à l'accepteur les données d'identification de l'objet portable, notamment le numéro et de la date d'expiration de la carte bancaire de l'utilisateur.

Dans le cas de certaines variantes de réalisation le procédé peut en outre comprendre l'étape de vérifier la validité de l'objet portable,

De préférence, le procédé est tel que pour déterminer si le paiement peut être effectué selon le mode avancé ou s'il doit être effectué selon le mode de base, l'organisme détecte qu'une clé publique de signature est associée au numéro d'appel. Il peut procéder à cette détection à partir d'une information provenant soit de l'opérateur de téléphonie soit du terminal mobile.

En fonction des résultats de cette détection et selon les options qu'il entend privilégier, l'organisme peut :
- soit inviter l'utilisateur à demander un certificat de manière à ce qu'il puisse accéder au mode avancé,
- soit accepter que l'utilisateur puisse continuer à effectuer des paiements à distance selon le mode de base.

De préférence, selon l'invention le procédé est tel que la détection intervient, au cours de ladite phase de paiement en mode de base, lors de la transmission par l'accepteur à l'organisme du numéro d'appel associé au terminal mobile.

De préférence, le procédé comprend en outre l'étape pour l'organisme de bloquer la mise en oeuvre du mode de base dans le cas où l'organisme détecte qu'une clé publique de signature est associée au numéro d'appel. Il résulte de la combinaison des traits techniques que l'utilisateur n'a pas d'autre solution pour effectuer des paiements à distance que de demander un certificat selon le mode avancé.

De préférence, dans le cas de cette variante de réalisation de l'invention le procédé comprend en outre l'étape, pour l'organisme, de contrôler qu'un utilisateur demandant un certificat n'utilise pas un mot de passe ayant déjà été utilisé en paiement en mode de base en association avec le numéro d'appel de l'utilisateur.

Il résulte de la combinaison des traits techniques que les risques de compromission de mots de passe sont réduits. De plus le niveau de sécurité est ainsi optimisé en mode avancé.

### Système

L'invention selon la revendication 8 concerne un système destiné à permettre à un utilisateur, disposant d'un objet portable et d'un terminal mobile ayant une fonction de téléphonie, d'effectuer un paiement à distance auprès d'un accepteur. L'objet portable se présentant notamment sous la forme d'une carte bancaire. le système comprend un mode avancé comportant trois phases :
- une phase d'enregistrement
- un processus de demande et de délivrance de certificat
- une phase de paiement.

On décrira ci-après les moyens mis en oeuvre lors de chacune des trois phases.

### (a) La phase d'enregistrement

Le système comprend, pour permettre l'enregistrement de l'utilisateur auprès d'un organisme, notamment un organisme bancaire :
- un terminal, notamment un terminal de type distributeur automatique de billets (DAB-GAB) ou de type terminal de paiement électronique (TPE), comportant des moyens d'accouplements permettant à l'utilisateur, d'accoupler l'objet portable au terminal,
- un serveur associé à une base de données de l'organisme.

le serveur comprend des moyens de connexion pour connecter, de manière directe ou indirecte, le terminal au serveur via un réseau de communication, notamment informatique. le terminal comprend en outre :
- une interface utilisateur-terminal permettant à l'utilisateur d'entrer dans le terminal, sur requête du terminal, des données d'authentification de l'utilisateur, notamment un code confidentiel et/ou des données bio-métriques, associées à l'objet portable.
- des moyens de vérification terminal pour vérifier que les données d'authentification de l'utilisateur, correspondent à l'objet portable.

Il résulte de la combinaison de ces traits techniques que la phase d'enregistrement permet d'authentifier l'objet portable et de vérifier que l'utilisateur est bien le titulaire de l'objet portable.

le terminal comprend en outre :
- des moyens de lecture terminal permettant de lire dans l'objet portable des données d'identification, notamment le numéro et la date d'expiration de l'objet portable ainsi que le nom et le prénom du titulaire de l'objet portable,
- des moyens de transmission terminal permettant de transmettre les données d'identification au serveur.

les moyens de lecture terminal et les moyens de transmission terminal sont mis en oeuvre lors de la phase d'enregistrement de l'utilisateur. le terminal est tel que la interface utilisateur-terminal comporte un clavier permettant à l'utilisateur de composer, sur requête du terminal, le numéro d'appel associé au terminal mobile.

le terminal comporte :
- des moyens de transmission terminal pour transmettre au serveur le numéro d'appel associé au terminal mobile,
- des moyens de communication terminal pour communiquer un mot de passe à l'utilisateur, notamment en affichant le mot de passe sur un écran du terminal ou en délivrant à l'utilisateur un ticket sur lequel est imprimé le mot de passe.

le mot de passe a été déterminé par le serveur en mettant en oeuvre des moyens de traitement informatique serveur. le mot de passe a été transmis par le serveur au terminal, via le réseau de communication. Il résulte de la combinaison des traits techniques que le mot de passe attribué par le serveur ne peut être transmis qu'à l'utilisateur titulaire de l'objet portable authentifié. les moyens de traitement informatique serveur comportent des moyens d'enregistrement pour mémoriser et associer dans la base de données : les données d'identification, le numéro d'appel associé au terminal mobile, et le mot de passe.

### (b) Le processus de demande, de production et de délivrance de certificat.

Le processus de demande, de production et de délivrance de certificat comporte une phase préalable.

### (b1) Phase préalable.

Le terminal mobile doit comporter une carte SIM personnalisée par un opérateur de téléphonie mobile. la carte SIM est associée au numéro d'appel du terminal mobile. la carte SIM doit contenir une clé privée de signature associée à une clé publique de signature et un mot de passe de signature. le mot de passe de signature est soit un mot de passe de signature d'origine que l'opérateur de téléphonie a déterminé et transmis à l'utilisateur, soit un nouveau mot de passe de signature que l'utilisateur a substitué au mot de passe de signature d'origine. la carte SIM comprend en outre :
- des fonctions cryptographiques,
- une application de demande de certificat comporte un mécanisme de signature mettant en oeuvre la clé privée de signature,
- une application de paiement.

l'organisme dispose de la clé publique de signature.

Il résulte de la combinaison des traits techniques que l'organisme est capable d'établir un lien entre le numéro d'appel et la clé publique de signature.

### (b2) Processus de demande.

Le système comprend en outre des moyens de demande et de délivrance de certificat susceptibles d'être mis en oeuvre par l'utilisateur et l'organisme pour demander et obtenir un certificat auprès de l'organisme. les moyens de demande et de délivrance de certificat sont composés de moyens de transmission terminal mobile pour transmettre une demande de certificat à l'organisme :
- en actionnant l'application de demande de certificat de la carte SIM,
- en saisissant sur le clavier du terminal mobile le mot de passe,
- en structurant, au moyen de l'application de demande de certificat, un message, notamment de type SMS, contenant le numéro d'appel et le mot de passe,
- en saisissant sur le clavier du terminal mobil'un mot de passe de signature. le mot de passe de signature ainsi saisi est comparé avec le mot de passe de signature de la carte SIM.

le mot de passe de signature active le mécanisme de signature :
- pour signer ledit message et produire une signature, et
- pour produire un message signé composé dudit message et de la signature ainsi produite, en mettant en oeuvre ladite clé privée de signature, et
- pour transmettre ledit message signé audit organisme.

### (b3) processus de vérification ;

Les moyens de demande et de délivrance de certificat sont en outre composés :
- des moyens de vérification serveur, mis en oeuvre par l'organisme, pour vérifier que le numéro d'appel et le mot de passe ainsi transmis ont bien été mémorisés lors de la phase d'enregistrement et sont associés dans la base de données de l'organisme,
- des moyens de traitement informatique serveur mis en oeuvre par l'organisme et agencés pour extraire, de la base de données, les données d'identification correspondant au numéro d'appel et au mot de passe, notamment le numéro et la date d'expiration dudit objet portable ainsi que le nom et le prénom du titulaire dudit objet portable,
- des moyens de traitement informatique serveur mis en oeuvre par ledit organisme et agencés pour rechercher la clé publique de signature associée au numéro d'appel,
- des moyens de traitement informatique serveur mis en oeuvre par l'organisme et agencés pour vérifier la signature au moyen de la clé publique de signature.

### (b4) Processus de production ;

Les moyens de demande, de production et de délivrance de certificat sont en outre composés :
- des moyens de production serveur pour fabriquer un certificat en utilisant notamment le numéro d'appel, tout ou partie des données d'identification et la clé publique de signature,
- des moyens de traitement informatique serveur mis en oeuvre par l'organisme et agencés pour mémoriser et associer avec le numéro d'appel et le mot de passe, dans la base de données de l'organisme, le certificat et une référence de certificat dudit certificat,
- desdits moyens de transmission serveur mis en oeuvre par l'organisme et agencés pour transmettre au terminal mobile, en réponse à la demande de certificat, la référence de certificat et une requête d'activation de l'application de demande de certificat,
- du terminal mobile agencé pour activer l'application de demande de certificat,
- de l'application de demande de certificat agencée pour mémoriser la référence de certificat dans la carte SIM.

### (c) La phase de paiement ;

Le système comprend en outre des moyens de transmission accepteur permettant audit utilisateur de transmettre audit accepteur ledit numéro d'appel associé audit terminal mobile.

Le serveur dudit organisme comprend en outre :
- des moyens de réception serveur pour recevoir de l'accepteur le numéro d'appel associé au terminal mobile ainsi que des informations relatives au paiement, dont le montant du paiement,
- des moyens de transmission serveur pour adresser au terminal mobile de l'utilisateur un message de demande de paiement, notamment de type SMS, en utilisant le numéro d'appel associé au terminal mobile.

Le message de demande de paiement comprend des informations relatives au paiement et une requête d'activation de l'application de paiement. Le terminal mobile est agencé pour d'activer l'application de paiement. L'application de paiement ainsi activée est agencée pour afficher les informations relatives au paiement ainsi que les références de certificat mémorisées dans la carte SIM.

Le terminal mobile est agencé pour que l'utilisateur puisse sélectionner, au moyen du clavier du terminal mobile, en cas de choix multiples, une référence de certificat à utiliser pour effectuer le paiement.

L'application de paiement est agencée pour afficher un champ de saisie du mot de passe de signature de sorte que l'utilisateur peut donner son accord concernant le paiement en saisissant le mot de passe de signature, dans ledit champ de saisie, au moyen dudit clavier du terminal mobile.

L'application de paiement est agencée pour contrôler le mot de passe de signature ainsi saisi en le comparant avec le mot de passe de signature de la carte SIM.

L'application de paiement est agencée pour :
- (i) structurer un message de paiement, notamment de type SMS, contenant la référence de certificat et des données de paiement, au moins en partie constituées à partir des informations relatives au paiement, notamment le montant du paiement, la date du paiement, une référence de transaction, une identification de l'accepteur,
- (ii) produire une signature en mettant en oeuvre la clé privée de signature,
- (iii) produire un message de paiement signé composé du message de paiement, et de la signature ainsi obtenue, et
- (iv) renvoyer au serveur de l'organisme, via les moyens de transmission terminal mobile, le message de paiement signé ainsi produit.

Les moyens traitement informatique serveur dudit organisme sont agencés pour extraire de la base de données, le certificat et tout ou partie des données d'identification, notamment le numéro et la date d'expiration de l'objet portable, correspondant au numéro d'appel associé au terminal mobile et à la référence de certificat.

Les moyens traitement informatique serveur dudit organisme sont agencés pour vérifier la signature du message de paiement signé en mettant en oeuvre la clé publique de signature du certificat.

Les moyens de traitement informatique serveur de l'organisme sont agencés pour vérifier que le certificat correspond à l'utilisateur ayant transmis à l'accepteur le numéro d'appel associé au terminal mobile et pour vérifier que le message de paiement signé ainsi renvoyé correspond au message de demande de paiement.

Les moyens de traitement informatique serveur dudit organisme sont agencés pour :
- faire débiter ou débiter un compte bancaire associé à l'objet portable du montant du paiement et faire créditer ou créditer l'accepteur du montant,
- confirmer auprès de l'accepteur le paiement à distance de l'utilisateur.

Ainsi, le paiement est acquitté à distance par l'utilisateur sans qu'il ait eu à communiquer à l'accepteur les données d'identification de l'objet portable, notamment le numéro et la date d'expiration de la carte bancaire de l'utilisateur.

De préférence, le système comprend, outre le mode avancé, un mode de base et un processus de sélection automatique du mode approprié. les moyens mis en oeuvre lors de la phase d'enregistrement du mode de base sont identiques aux moyens mis en oeuvre lors de la phase d'enregistrement du mode avancé. les moyens de traitement informatique serveur sont agencés pour déterminer si le paiement peut être effectué selon le mode avancé ou s'il doit être effectué selon le mode de base. la détermination peut être effectuée au cours de la phase de paiement (c) et/ou au cours du processus de demande et de délivrance de certificat (b). dans le cas où le paiement ne peut pas être effectué selon le mode avancé, les moyens mis en oeuvre lors du processus de demande de délivrance de certificat (b) et lors du processus de la phase de paiement (c) du mode avancé sont substitués par les moyens ci-après spécifiés plus particulièrement agencés au paiement en mode de base.

le système comprend en outre des moyens de transmission accepteur permettant à l'utilisateur de transmettre à l'accepteur le numéro d'appel associé au terminal mobile. les moyens de réception serveur du serveur de l'organisme sont agencés pour recevoir de l'accepteur le numéro d'appel associé au terminal mobile ainsi que des informations relatives au paiement, dont le montant du paiement. les moyens de réception serveur du serveur de l'organisme sont agencés pour adresser à l'utilisateur un message, notamment de type SMS, en utilisant le numéro d'appel associé au terminal mobile. le message comprend les informations relatives au paiement et une requête de saisie du mot de passe, se présentant notamment sous la forme d'un champ de saisie dans le message. les moyens de transmission terminal mobile sont agencés pour permettre à l'utilisateur de transmettre en retour le mot de passe au serveur de l'organisme, notamment en saisissant le mot de passe dans le champ de saisie. les moyens de traitement informatique serveur sont agencés pour vérifier dans la base de données que le mot de passe, transmis par l'utilisateur, correspond au numéro d'appel associé au terminal mobile transmis par l'accepteur. les moyens de traitement informatique serveur sont agencés pour rechercher dans la base de données, tout ou partie des données d'identification, notamment le numéro et la date d'expiration de l'objet portable, correspondant au numéro d'appel associé au terminal mobile et au mot de passe. les moyens de traitement informatique serveur sont agencés pour faire débiter ou débiter un compte bancaire associé à l'objet portable du montant du paiement et faire créditer ou créditer l'accepteur du montant. les moyens de traitement informatique serveur sont agencés pour confirmer auprès de l'accepteur le paiement à distance de l'utilisateur. Il résulte de la combinaison des traits techniques que le paiement est acquitté à distance par l'utilisateur sans qu'il ait eu à communiquer à l'accepteur les données d'identification de l'objet portable, notamment le numéro et la date d'expiration de la carte bancaire de l'utilisateur.

De préférence, le système est tel que pour déterminer si le paiement peut être effectué selon le mode avancé ou s'il doit être effectué selon le mode de base, les moyens de traitement informatique serveur de l'organisme détectent si une clé publique de signature est associée au numéro d'appel soit que cette information provienne de l'opérateur de téléphonie soit qu'elle provienne du terminal mobile. Il résulte de la combinaison des traits techniques que l'organisme peut, selon les options qu'il entend privilégier :
- soit inviter l'utilisateur à demander un certificat de manière qu'il puisse accéder au mode avancé,
- soit accepter que l'utilisateur puisse continuer à effectuer des paiements à distance selon le mode de base.

De préférence, le système est tel que la détection par les moyens de traitement informatique serveur intervient, au cours de ladite phase de paiement en mode de base, lors de la transmission par l'accepteur à l'organisme du numéro d'appel associé au terminal mobile.

De préférence, les moyens de traitement informatique serveur comprennent en outre des moyens de verrouillage pour bloquer la mise en oeuvre du mode de base dans le cas où l'organisme détecte qu'une clé publique de signature est associée au numéro d'appel. Il résulte de la combinaison des traits techniques que l'utilisateur n'a pas d'autre solution pour effectuer des paiements à distance que de demander un certificat selon le mode avancé.

De préférénce, les moyens de traitement informatique serveur comprennent en outre des moyens de contrôle pour contrôler qu'un utilisateur demandant un certificat n'utilise pas un mot de passe ayant déjà été utilisé en paiement en mode de base en association avec le numéro d'appel de l'utilisateur. Il résulte de la combinaison des traits techniques que les risques de compromission de mots de passe sont réduits. Le niveau de sécurité est ainsi optimisé en mode avancé.

### Description détaillée

D'autres caractéristiques et avantages de l'invention apparaîtront à la lecture de la description de variante de réalisation de l'invention données à titre d'exemple indicatif et non limitatif, et de la
- figure 1 qui représente, de manière schématique, les moyens techniques mis en oeuvre lors de la phase d'enregistrement (mode avancé ou mode de base),
- figure 2 qui représente, de manière schématique, les moyens techniques mis en oeuvre lors du processus de demande et de délivrance d'un certificat (mode avancé),
- figure 3 qui représente, de manière schématique, les moyens techniques mis en oeuvre lors de la phase de paiement (mode avancé),
- figure 4 qui représente, de manière schématique, les moyens techniques mis en oeuvre lors de la phase de paiement (mode de base).

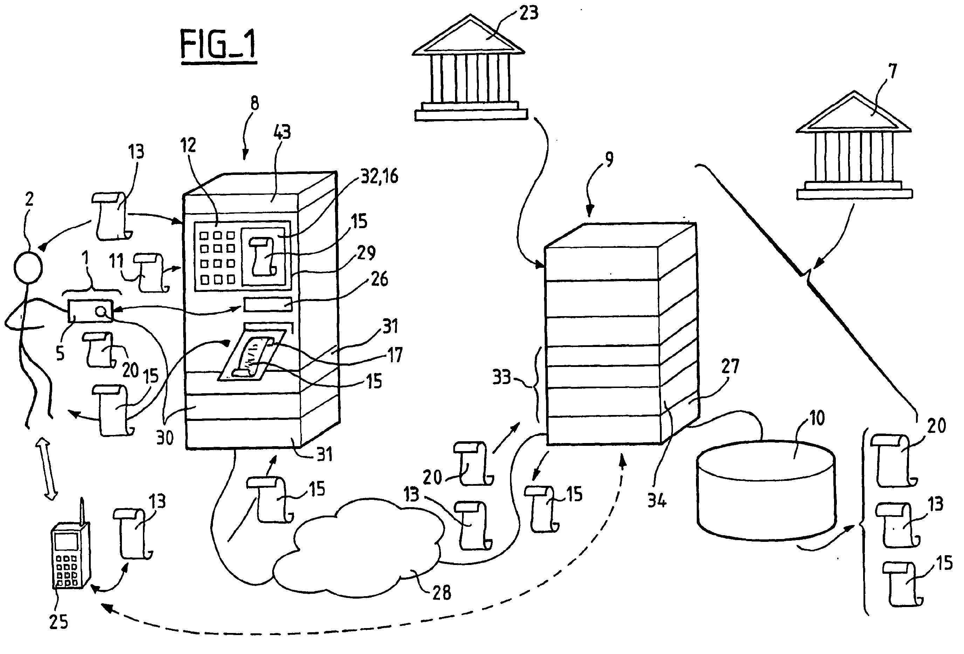

On va maintenant décrire, en se référant aux figures 1 à 4, une variante de réalisation d'un système permettant d'effectuer un paiement à distance auprès d'un accepteur 23. A cet effet, l'utilisateur 2 dispose d'un objet portable 1 et d'un terminal mobile 25 ayant une fonction de téléphonie. l'objet portable 1 se présente notamment sous la forme d'une carte bancaire 5.

le système opère selon deux modes un mode de base et un mode avancé.

### Le mode avancé

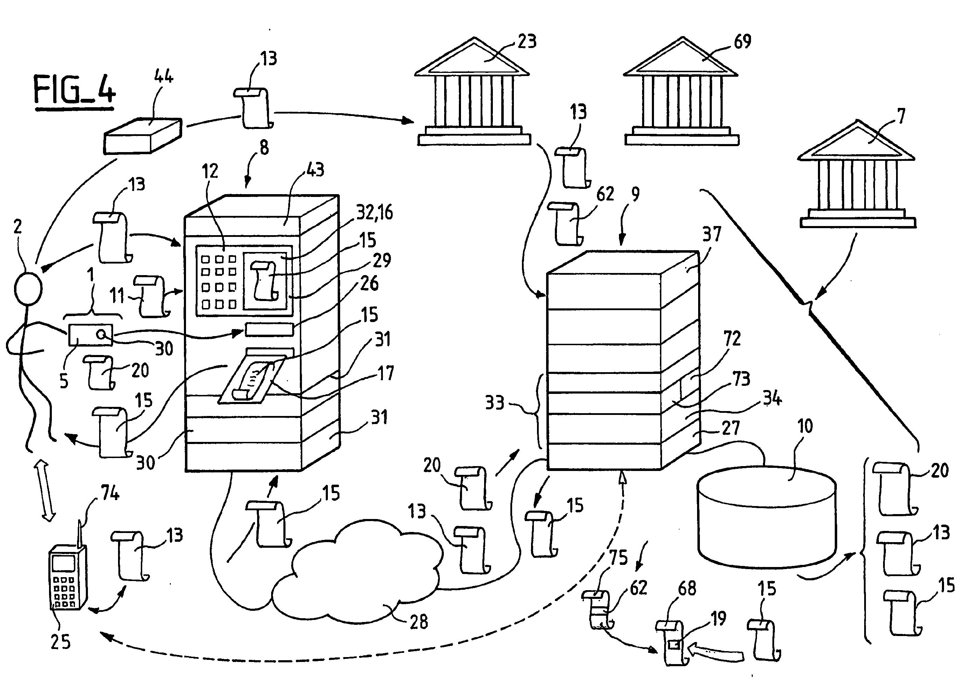

On décrira en premier lieu le mode avancé en se référant aux figures 1 à 3 puis enduite le mode de base en se référant aux figures 1 et 4.

Le mode avancé comporte trois phases :
- une phase d'enregistrement
- un processus de demande et de délivrance de certificat,
- une phase de paiement.

### (a) La phase d'enregistrement.

On va décrire les moyens techniques mis en oeuvre lors de la phase d'enregistrement en se référant à la figure 1.

Le système comprend, pour permettre l'enregistrement de l'utilisateur 2 auprès d'un organisme 7, notamment un organisme bancaire, un terminal 8, notamment un terminal de type distributeur automatique de billets (DAB-GAB) ou de type terminal de paiement électronique (TPE) . Le terminal 8 comporte des moyens d'accouplements 26 permettant à l'utilisateur 2, d'accoupler l'objet portable 1 au terminal 8. Le système comprend en outre un serveur 9 associé à une base de données 10 de l'organisme 7. le serveur 9 comprend des moyens de connexion 27 pour connecter, de manière directe ou indirecte, le terminal 8 au serveur 9 via un réseau de communication 28, notamment informatique.

le terminal 8 comprend en outre :
- une interface utilisateur-terminal 29 permettant à l'utilisateur 2 d'entrer dans le terminal 8, sur requête du terminal 8, des données d'authentification 11 de l'utilisateur 2, notamment un code confidentiel et/ou des données bio-métriques, associées à l'objet portable 1.
- des moyens, de vérification terminal 30 pour vérifier que les données d'authentification 11 de l'utilisateur 2, correspondent à l'objet portable 1.

Il résulte de la combinaison des traits techniques ci-dessus décrits que la phase d'enregistrement permet d'authentifier l'objet portable 1 et de vérifier que l'utilisateur 2 est bien le titulaire de l'objet portable 1.

le terminal 8 comprend en outre :
- des moyens de lecture terminal 43 permettant de lire dans l'objet portable 1 des données d'identification 20, notamment le numéro et la date d'expiration de l'objet portable 1 ainsi que le nom et le prénom du titulaire de l'objet portable 1,
- des moyens de transmission terminal 31 permettant de transmettre les données d'identification 20 au serveur 9.

les moyens de lecture terminal 43 et les moyens de transmission terminal 31 sont mis en oeuvre lors de la phase d'enregistrement de l'utilisateur 2. le terminal 8 est tel que l'interface utilisateur-terminal 29 comporte un clavier 12 permettant à l'utilisateur 2 de composer, sur requête du terminal 8, le numéro d'appel 13 associé au terminal mobile 25.

le terminal 8 comporte en outre :
- des moyens de transmission terminal 31 pour transmettre au serveur 9 le numéro d'appel 13 associé au terminal mobile 25,
- des moyens de communication terminal 32 pour communiquer un mot de passe 15 à l'utilisateur 2, notamment en affichant le mot de passe 15 sur un écran 16 du terminal 8 ou en délivrant à l'utilisateur 2 un ticket 17 sur lequel est imprimé le mot de passe 15.

le mot de passe 15 est déterminé par le serveur 9 en mettant en oeuvre des moyens de traitement informatique serveur 33. le mot de passe 15 est été transmis par le serveur 9 au terminal 8, via le réseau de communication 28.

Il résulte de la combinaison des traits techniques que le mot de passe 15 attribué par le serveur 9 ne peut être transmis qu'à l'utilisateur 2 titulaire de l'objet portable 1 authentifié.

les moyens de traitement informatique serveur 33 comportent des moyens d'enregistrement 34 pour mémoriser et associer dans la base de données 10 :
- les données d'identification 20,
- le numéro d'appel 13 associé au terminal mobile 25,
- le mot de passe 15.

### (b) Le processus de demande et de délivrance de certificat.

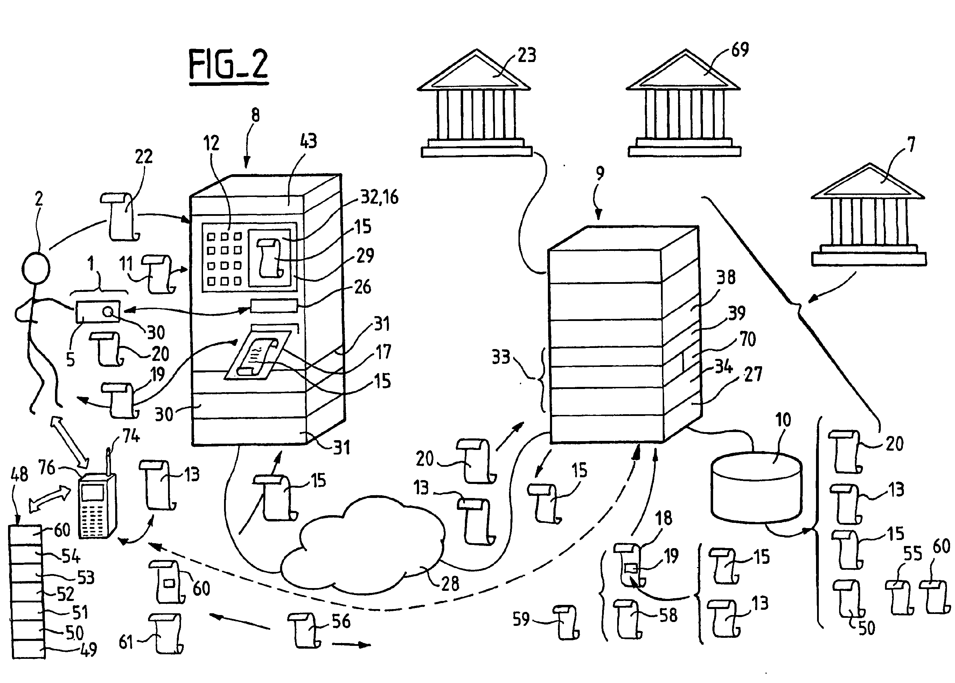

On va maintenant décrire les moyens techniques mis en oeuvre lors du processus de demande et de délivrance de certificat 55 en se référant à la figure 2.

### (b1) Phase préalable.

Le système comprend des moyens de demande et de délivrance de certificat 55. Ces moyens sont susceptibles d'être mis en oeuvre par l'utilisateur 2 et l'organisme 7 dans le cas où le terminal mobile 25 comporte une carte SIM 48 personnalisée par un opérateur de téléphonie 69 mobile.

La carte SIM 48 est associée au numéro d'appel 13 du terminal mobile 25. la carte SIM 48 contient une clé privée de signature 49 associée à une clé publique de signature 50 et un mot de passe de signature 51. le mot de passe de signature 51 est soit un mot de passe de signature 51 d'origine que l'opérateur de téléphonie 69 a déterminé et transmis à l'utilisateur 2, soit un nouveau mot de passe de signature 51 que l'utilisateur 2 a substitué au mot de passe de signature 51 d'origine. la carte SIM 48 comprend en outre :
- des fonctions cryptographiques,
- une application de demande de certificat 52 comportant un mécanisme de signature 53 mettant en oeuvre la clé privée de signature 49,
- une application de paiement 54.

l'organisme 7 dispose de la clé publique de signature 50.

Il résulte de la combinaison des traits techniques que l'organisme 7 est capable d'établir un lien entre le numéro d'appel 13 et la clé publique de signature 50.

### (b2) Processus de demande de certificat 55

Les moyens 55, pour demander et obtenir la délivrance d'un certificat 55 auprès de l'organisme 7, sont composés de moyens de transmission terminal mobile 74, mis en oeuvre par l'utilisateur 2, pour transmettre une demande de certificat 56 à l'organisme 7. La demande de certificat 56 est obtenue :
- en actionnant l'application de demande de certificat 52 de la carte SIM 48,
- en saisissant sur le clavier terminal mobile 76 le mot de passe 15,
- en structurant, au moyen de l'application de demande de certificat 52, un message 18, notamment de type SMS, contenant le numéro d'appel 13 et le mot de passe 15,
- en saisissant sur le clavier terminal mobile 76 un mot de passe signature 51.

le mot de passe de signature 51 ainsi saisi par l'utilisateur 2 est comparé avec le mot de passe de signature 51 de la carte SIM 48. le mot de passe de signature 51 active le mécanisme de signature 53 qui a pour effet :
- de signer le message 18, et
- de produire un message signé 59 composé du message 18 et de la signature 58 ainsi obtenue, en mettant en oeuvre la clé privée de signature 49, et
- de transmettre le message signé 59 à l'organisme 7.

### (b3) Processus de vérification.

Les moyens 55, pour demander et obtenir un certificat 55 auprès de l'organisme 7, comprennent en outre:
- des moyens de vérification serveur 39, mis en oeuvre par l'organisme 7, pour vérifier que le numéro d'appel 13 et le mot de passe 15 ainsi transmis ont bien été mémorisés lors de la phase d'enregistrement et sont associés dans la base de données 10 de l'organisme 7,
- des moyens de traitement informatique serveur 33 mis en oeuvre par l'organisme 7 et agencés pour extraire, de la base de données 10, les données d'identification 20, correspondant au numéro d'appel 13 et au mot de passe 15, notamment le numéro et la date d'expiration de l'objet portable 1 ainsi que le nom et le prénom du titulaire de l'objet portable 1,
- des moyens de traitement informatique serveur 33 mis en oeuvre par l'organisme 7 et agencés pour rechercher la clé publique de signature 50 associée au numéro d'appel 13,
- des moyens de traitement informatique serveur 33 mis en oeuvre par l'organisme 7 et agencés pour vérifier la signature 58 au moyen de la clé publique de signature 50.

### (b4) Processus de production du certificat 55.

les moyens 55, pour demander et obtenir un certificat 55 auprès de l'organisme 7, comprennent en outre :
- de moyens de production serveur 70 pour fabriquer un certificat 55 en utilisant notamment le numéro d'appel 13, tout ou partie des données d'identification 20 et la clé publique de signature 50,
- des moyens de traitement informatique serveur 33 mis en oeuvre par l'organisme 7 et agencés pour mémoriser et associer avec le numéro d'appel 13 et le mot de passe 15, dans la base de données 10 de l'organisme 7, le certificat 55 et une référence de certificat 60 du certificat 55,
- des moyens de transmission serveur 38 mis en oeuvre par l'organisme 7 et agencés et agencés pour transmettre au terminal mobile 25, en réponse à la demande de certificat 56, la référence de certificat 60 et une requête d'activation 61 de l'application de demande de certificat 52.

Le terminal mobile 25 est agencé pour activer l'application de demande de certificat 52 lorsqu'il reçoit la requête d'activation 61. L'application de demande de certificat 52 est agencée pour mémoriser la référence de certificat 60 dans la carte SIM 48.

### (c) La phase de paiement.

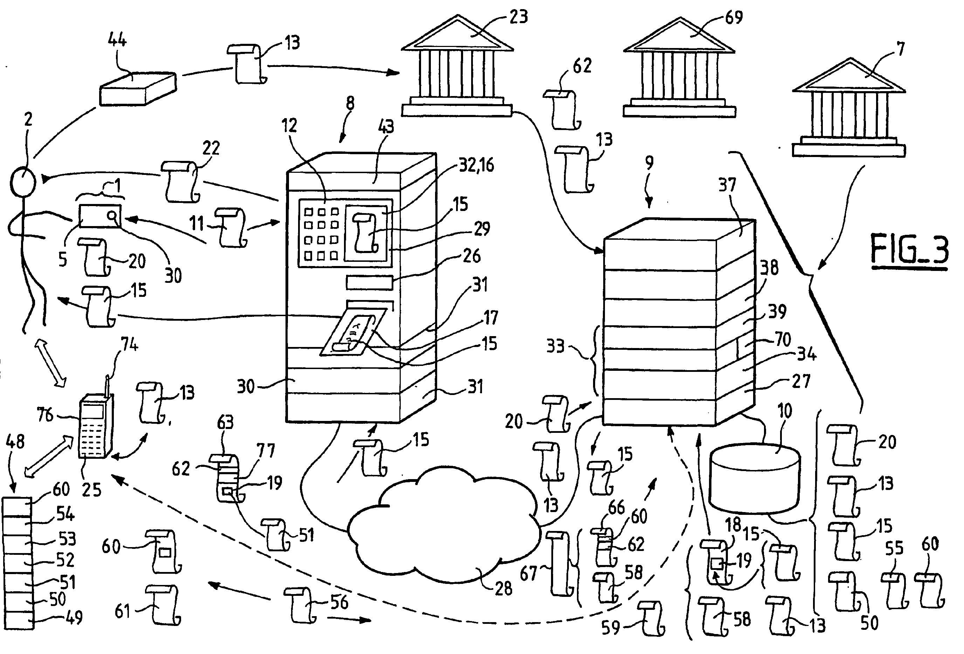

On va maintenant décrire les moyens techniques mis en oeuvre lors de la phase de paiement en se référant à la figure 3.

le système comprend des moyens de transmission accepteur 44 permettant à l'utilisateur 2, de transmettre à l'accepteur 23 le numéro d'appel 13 associé au terminal mobile 25.

le serveur 9 de l'organisme 7 comprend en outre :
- des moyens de réception serveur 37 pour recevoir de l'accepteur 23 le numéro d'appel 13 associé au terminal mobile 25 ainsi que des informations relatives au paiement 62, dont le montant du paiement,
- des moyens de transmission serveur 38 pour adresser au terminal mobile 25 de l'utilisateur 2 un message de demande de paiement 63, notamment de type SMS, en utilisant le numéro d'appel 13 associé au terminal mobile 25.

le message de demande de paiement 63 comprend les informations relatives au paiement 62 et une requête d'activation de l'application de paiement 77. le terminal mobile 25 est agencé pour d'activer l'application de paiement 54 lorsqu'il reçoit la requête d'activation de l'application de paiement 77. L'application de paiement 54 ainsi activée est agencée pour afficher les informations relatives au paiement 62 ainsi que les références de certificat 60 mémorisées dans la carte SIM 48. le terminal mobile 25 est agencé pour que l'utilisateur 2 puisse sélectionner, au moyen du clavier terminal mobile 76, en cas de choix multiples, une référence de certificat 60 à utiliser pour effectuer le- paiement. L'application de paiement 54 est agencée pour afficher un champ de saisie 19 du mot de passe de signature 51 de sorte que l'utilisateur 2 puisse donner son accord concernant le paiement en saisissant le mot de passe de signature 51, dans le champ de saisie 19, au moyen du clavier terminal mobile 76. L'application de paiement 54 est agencée pour contrôler le mot de passe de signature 51 ainsi saisi en le comparant avec le mot de passe de signature 51 de la carte SIM 48.

L'application de paiement 54 est agencée pour :
- (i) structurer un message de paiement 66, notamment de type SMS, contenant la référence de certificat 60 et des données de paiement, au moins en partie constituées à partir des informations relatives au paiement 62, notamment le montant du paiement, la date du paiement, une référence de transaction, une identification de l'accepteur 23,
- (ii) produire une signature 58 en mettant en oeuvre la clé privée de signature 49,
- (iii) produire un message de paiement signé 67 composé du message de paiement 66 et de la signature 58 ainsi obtenue, et
- (iv) renvoyer au serveur 9 de l'organisme 7, via les moyens de transmission terminal mobile 74, le message de paiement signé 67 ainsi produit.

les moyens de traitement informatique serveur 33 de l'organisme 7 sont agencés pour extraire de la base de données 10 :
(i) le certificat 55, et
(ii) tout ou partie des données d'identification 20, notamment le numéro et la date d'expiration de l'objet portable 1, correspondant au numéro d'appel 13 associé au terminal mobile 25 et à la référence de certificat 60.

les moyens de traitement informatique serveur 33 de l'organisme 7 sont agencés pour vérifier la signature 58 du message de paiement signé 67 en mettant en oeuvre la clé publique de signature 50 du certificat 55. Les moyens de traitement informatique serveur 33 de l'organisme 7 sont également agencés pour vérifier que le certificat 55 correspond à l'utilisateur 2 ayant transmis à l'accepteur 23 le numéro d'appel 13 associé au terminal mobile 25 et pour vérifier que le message de paiement signé 67 ainsi renvoyé correspond au message de demande de paiement 63. les moyens de traitement informatique serveur 33 de l'organisme 7 sont également agencés pour :
- faire débiter ou débiter un compte bancaire associé à l'objet portable 1 du montant du paiement et de faire créditer ou créditer l'accepteur 23 du montant,
- confirmer auprès de l'accepteur 23 le paiement à distance de l'utilisateur 2.

Il serait préférable, avant de confirmer auprès de l'accepteur le paiement à distance de l'utilisateur, de vérifier la validité de l'objet portable et du certificat.

Il résulte de la combinaison des traits techniques que le paiement est acquitté à distance par l'utilisateur 2 sans qu'il ait eu à communiquer à l'accepteur 23 les données d'identification 20 de l'objet portable 1, notamment le numéro et la date d'expiration de la carte bancaire 5 de l'utilisateur 2.

On constate que le paiement ainsi acquitté à distance est non-répudiable. Tout se passe comme si l'utilisateur 2 titulaire et porteur de la carte bancaire 5 a signé de façon manuscrite un ticket de paiement par carte bancaire. Sa responsabilité est engagée même si au niveau interbancaire on n'a pas ou plus les moyens de vérifier la validité de telles facturettes papier.

En effet, on dispose d'une signature électronique susceptible d'être qualifiée avec un enchaînement de preuves successives :
- le paiement est signé en référence au certificat 55,
- la demande de certificat 56 est signée par la carte SIM avec authentification du porteur par son mot de passe de signature 51,
- la demande d'enregistrement au système de paiement selon l'invention est validée par la puce de la carte bancaire du porteur et par une première utilisation du mot de passe fourni.

Sur ces bases, la banque de l'accepteur jouant le rôle de l'organisme ou s'appuyant sur celui-ci doit pouvoir garantir formellement le paiement vis à vis de l'accepteur.

On constate enfin qu'il n'est pas utile de gérer la révocation de tels certificats et donc qu'il n'est pas nécessaire de mettre en place un service de validation car :
- si la carte bancaire est perdue ou volée : la mise en opposition de la carte bancaire 5 empêche l'utilisation du certificat 55 puisque, lors des opérations de vérification par l'organisme 7 que le certificat 55 correspond à l'utilisateur concerné, il apparaîtra que sa carte bancaire 5 a été mise en opposition,
- si la carte SIM 48 est perdue ou volée : la mise en opposition de la carte SIM bloque toute possibilité de communication et donc toute possibilité d'utilisation du certificat 55 présent dans la carte SIM.

Le système peut également opérer selon un autre appelé mode de base qui sera ci-après décrit en se référant aux figures 1 et 4. Ce mode de base comporte une phase d'enregistrement et une phase de paiement.

Les moyens mis en oeuvre lors de la phase d'enregistrement du mode de base sont identiques aux moyens mis en oeuvre lors de la phase d'enregistrement du mode avancé. Ils ont été décrits en se référant à la figure 1.

Un processus de sélection automatique approprié permet de sélectionner le mode selon lequel le paiement à distance sera effectué (mode avancé en principe ou mode de base à défaut).

Les moyens de traitement informatique serveur 33 sont agencés pour déterminer si le paiement peut être effectué selon le mode avancé ou s'il doit être effectué selon le mode de base. Cette détermination peut être effectuée au cours de la phase de paiement (c) et/ou au cours du processus (b) de demande et de délivrance de certificat 55.

Selon une variante de réalisation préférentielle de l'invention pour déterminer si le paiement peut être effectué selon le mode avancé ou s'il doit être effectué selon le mode de base, les moyens de traitement informatique serveur 33 de l'organisme 7 détectent, au cours de la phase de paiement en mode de base, si une clé publique de signature 50 est associée au numéro d'appel 13 soit que cette information provienne de l'opérateur de téléphonie 69 soit qu'elle provienne du terminal mobile 25. L'organisme 7 peut alors, selon les options qu'il entend privilégier :
soit inviter l'utilisateur 2 à demander un certificat 55 de manière à ce qu'il puisse accéder au mode avancé,
soit accepter que l'utilisateur 2 puisse continuer à effectuer des paiements à distance selon le mode de base.

Il est toujours souhaitable de sélectionner, parmi les modes possibles, le plus sécurisé. L'objectif à terme est de généraliser le mode le plus sécurisé, c'est à dire le mode avancé. Si on est obligé momentanément d'admettre un mode de base c'est qu'il serait économiquement trop contraignant voir impossible d'exiger d'emblée le mode avancé. L'objectif pour les accepteurs est de pouvoir se passer du mode de vente à distance classique.

Plus particulièrement, dans le cas de la variante de réalisation décrite, la détection par les moyens de traitement informatique serveur 33 intervient lors de la transmission par l'accepteur 23 à l'organisme 7 du numéro d'appel 13 associé au terminal mobile 25.

Plus particulièrement également, dans le cas de la variante de réalisation décrite, les moyens de traitement informatique serveur 33 comprennent en outre des moyens de verrouillage 72 pour bloquer la mise en oeuvre du mode de base dans le cas où l'organisme 7 détecte qu'une clé publique de signature 50 est associée au numéro d'appel 13. Il en résulte que l'utilisateur 2 n'a pas d'autre solution pour effectuer des paiements à distance que de demander un certificat 55 selon le mode avancé.

De préférence, les moyens de traitement informatique serveur 33 comprennent en outre des moyens de contrôle 73 pour contrôler qu'un utilisateur 2 demandant un certificat 55 n'utilise pas un mot de passe 15 ayant déjà été utilisé en paiement en mode de base en association avec le numéro d'appel 13 de l'utilisateur 2. Il en résulte que les risques de compromission de mots de passe sont réduits. le niveau de sécurité est optimisé en mode avancé. De préférence, le processus de demande de délivrance de certificat met en oeuvre un mécanisme préservant la confidentialité du mot de passe lors de la transmission à l'organisme.

### Phase de paiement en mode de base

Dans le cas où le paiement ne peut pas être effectué selon le mode avancé, les moyens mis en oeuvre lors du processus (b) de demande de délivrance de certificat 55 et lors de la phase de paiement (c) du mode avancé sont substitués par les moyens ci-après spécifiés plus particulièrement agencés en vue du paiement en mode de base.

Le système comprend à cet effet des moyens de transmission accepteur 44 permettant à l'utilisateur 2 de transmettre à l'accepteur 23 le numéro d'appel 13 associé au terminal mobile 25. les moyens de réception serveur 37 du serveur 9 de l'organisme 7 sont agencés pour recevoir de l'accepteur 23 le numéro d'appel 13 associé au terminal mobile 25 ainsi que des informations relatives au paiement 62, dont le montant du paiement. les moyens de réception serveur 37 du serveur 9 de l'organisme 7 sont agencés pour adresser à l'utilisateur 2 un message de saisie 75, notamment de type SMS, en utilisant le numéro d'appel 13 associé au terminal mobile 25. le message de saisie 75 comprend les informations relatives au paiement 62 et une requête de saisie du mot de passe 68, se présentant notamment sous la forme d'un champ de saisie 19 dans le message de saisie 75. les moyens de transmission terminal mobile 74 sont agencés pour permettre à l'utilisateur 2 de transmettre en retour le mot de passe 15 au serveur 9- de l'organisme 7, notamment en saisissant le mot de passe 15 dans le champ de saisie 19. les moyens de traitement informatique serveur 33 sont agencés pour vérifier dans la base de données 10 que le mot de passe 15, transmis par l'utilisateur 2, correspond au numéro d'appel 13 associé au terminal mobile 25 transmis par le accepteur 23. Les moyens de traitement informatique serveur 33 sont agencés pour rechercher dans la base de données 10, tout ou partie des données d'identification 20, notamment le numéro et la date d'expiration de l'objet portable 1, correspondant au numéro d'appel 13 associé au terminal mobile 25 et au mot de passe 15. Les moyens de traitement informatique serveur 33 sont agencés pour faire débiter ou débiter un compte bancaire associé à l'objet portable 1 du montant du paiement et de faire créditer ou créditer l'accepteur 23 du montant. Les moyens de traitement informatique serveur 33 sont agencés pour confirmer auprès de l'accepteur 23 le paiement à distance de l'utilisateur 2. Il serait préférable, avant de confirmer auprès de l'accepteur le paiement à distance de l'utilisateur, de vérifier la validité de l'objet portable. Il résulte de la combinaison des traits techniques que le paiement est acquitté à distance par l'utilisateur 2 sans qu'il ait eu à communiquer à l'accepteur 23 les données d'identification 20 de l'objet portable 1, notamment le numéro et de la date d'expiration de la carte bancaire 5 de l'utilisateur 2.

### Modèle économique

Les opérateurs de téléphonie mobile 69 devraient trouver un fort intérêt pour le procédé et le système selon l'invention, en mode de base et en mode avancé. Ils ont en effet un problème aigu en matière de rechargement et ils ont besoin de nouvelles sources de revenu pour justifier les investissements considérables qui sont nécessaires pour passer à la technologie haut débit (dont UMTS).

Les rechargements par carte à gratter leur coûtent très cher et les rechargements par carte bancaire en mode vente à distance occasionnent un taux d'impayé excessif.

Pour pouvoir bénéficier de la réduction du taux d'impayé permis par le procédé et le système selon l'invention, les opérateurs de téléphonie mobile 69 ne devront plus accepter des paiements en mode vente à distance traditionnel par carte bancaire car :
- seuls les clients honnêtes sont susceptibles d'accepter de payer selon le procédé ou le système selon l'invention (ou selon d'autres formes de paiement sécurisé)
- alors que 100 % des fraudeurs risquent de continuer à payer en mode vente à distance traditionnelle.

Le procédé et le système selon l'invention permettent à un accepteur 23 et notamment aux opérateurs français de téléphonie mobile 69 de refuser de continuer à accepter des paiements en mode vente à distance traditionnel. En effet, la phase d'enregistrement préalable est accessible, à tout utilisateur d'un terminal mobile disposant d'une carte bancaire, en libre service sur des distributeurs automatiques de billets (DAB) présents à travers toute la France. La souplesse de la phase d'enregistrement offerte par le procédé et le système selon l'invention ne constitue donc pas une contrainte inacceptable pour les utilisateurs. Selon l'ancienneté du terminal mobile et de sa carte SIM, l'utilisateur pourra accéder au mode avancé et sinon, au pire, au mode de base qui est en tout état de cause accessible.

L'opération de rechargement, vitales pour les opérateurs de téléphonie, sera l'application de lancement (la « killer application ») du procédé et du système selon l'invention : cette application sera suffisante pour assurer l'adhésion d'un très grand nombre d'utilisateurs au procédé et au système selon l'invention.

Grâce à cette dynamique, d'autres accepteurs 23 offrant des biens ou des services à distance adopteront à leur tour le procédé et le système selon l'invention. Ils pourront ainsi bénéficier pour eux-mêmes d'une réduction de leur taux d'impayés sur les paiements encaissés par carte bancaire 5.

Les opérateurs de téléphonie mobile 69 seront néanmoins les premiers bénéficiaires du procédé et le système selon l'invention. Le succès commercial de la présente invention dépendra largement d'eux :
- ils refuseront de continuer à accepter le mode vente à distance et en pousseront les utilisateurs à s'enregistrer au procédé et au système selon l'invention,
- ils permettront ainsi de généraliser progressivement l'utilisation des cartes SIM préparées pour la signature électronique, pour effectuer des paiements à distance non-répudiables.

Les opérateurs seront donc associés à l'organisme, notamment une ou des banques, au lancement du procédé et du système selon l'invention.

**NOMENCLATURE**

| **Groupe nominal** | **Réf. Num.** |
|---|---|
| objet portable | 1 |
| utilisateur | 2 |
| carte bancaire | 5 |
| organisme | 7 |
| terminal | 8 |
| serveur | 9 |
| base de données | 10 |
| données d'authentification | - 11 |
| clavier | 12 |
| numéro d'appel | 13 |
| mot de passe | 15 |
| écran | 16 |
| ticket | 17 |
| message | 18 |
| champ de saisie | 19 |
| données d'identification | 20 |
| acçepteur | 23 |
| terminal mobile | 25 |
| moyens d'accouplements | 26 |
| moyens de connexion | 27 |
| réseau de communication | 28 |
| interface utilisateur-terminal | 29 |
| moyens de vérification terminal | 30 |
| moyens de transmission terminal | 31 |
| moyens de communication terminal | 32 |
| moyens de traitement informatique serveur | 33 |
| moyens d'enregistrement | 34 |
| moyens de réception serveur | 37 |
| moyens de transmission serveur | 38 |
| moyens de vérification serveur | 39 |
| moyens de lecture terminal | 43 |
| moyens de transmission accepteur | 44 |
| carte SIM | 48 |
| clé privée de signature | 49 |
| publique de signature | 50 |
| mot de passe de signature | 51 |
| application de demande de certificat | 52 |
| mécanisme de signature | 53 |
| une application de paiement | 54 |
| certificat | 55 |
| demande de certificat | 56 |
| signature | 58 |
| message signé | 59 |
| Référence(s) de certificat | 60 |
| requête d'activation de l'application de demande de certificat | 61 |
| informations relatives audit paiement | 62 |
| message de demande de paiement | 63 |
| message de paiement | 66 |
| message de paiement signé | 67 |
| requête de saisie dudit mot de passe | 68 |
| opérateur de téléphonie | 69 |
| moyens de production serveur | 70 |
| moyens de transmission serveur | 71 |
| moyens de verrouillage | 72 |
| moyens de contrôle | 73 |
| moyens de transmission terminal mobile | 74 |
| Message de saisie | 75 |
| Clavier terminal mobile | 76 |
| Requête d'activation de l'application de paiement | 77 |

## Revendications

1. Procédé destiné à permettre à un utilisateur (2), disposant d'un objet portable (1) et d'un terminal mobile (25) ayant une fonction de téléphonie, d'effectuer un paiement à distance auprès d'un accepteur (23) ; ledit terminal mobile (25) comportant une carte SIM (48) personnalisée par un opérateur de téléphonie mobile ; ladite carte SIM (48) étant associée audit numéro d'appel (13) dudit terminal mobile (25) ; ladite carte SIM (48) contenant :
• une clé privée de signature (49) associée à une clé publique de signature (50),
• un mot de passe de signature (51); ledit mot de passe de signature (51) étant soit un mot de passe de signature (51) d'origine que ledit opérateur de téléphonie (69) a déterminé et transmis audit utilisateur (2), soit un nouveau mot de passe de signature (51) que ledit utilisateur (2) a substitué audit mot de passe de signature (51) d'origine ; ladite carte SIM (48) comprenant en outre :
• des fonctions cryptographiques,
• une application de demande de certificat (52) comportant un mécanisme de signature (53) mettant en oeuvre ladite clé privée de signature (49),
• une application de paiement (54),
un organisme (7) disposant de ladite clé publique de signature (50) ;
de sorte que l'organisme (7) est capable d'établir un lien entre le numéro d'appel (13) et la clé publique de signature (50) ;
ledit procédé comprenant un mode avancé comportant trois phases :
- une phase d'enregistrement
- un processus de demande et de délivrance de certificat
- une phase de paiement ;
lors d'une phase d'enregistrement dudit utilisateur (2) auprès dudit organisme (7) :
- l'étape, pour ledit utilisateur (2), d'accoupler ledit objet portable (1) à un terminal (8) ; ledit terminal (8) étant connecté de manière directe ou indirecte à un serveur (9) associé à une base de données (10) dudit organisme (7) ;
ledit procédé comprenant en outre, lors de ladite phase d'enregistrement :
- l'étape, pour ledit utilisateur (2), sur requête dudit terminal (8), d'entrer dans ledit terminal (8) des données d'authentification (11) dudit utilisateur (2) associées audit objet portable (1),
- l'étape, pour ledit terminal (8), de vérifier que lesdites données d'authentification (11) dudit utilisateur (2), correspondent audit objet portable (1) ;
de sorte que la phase d'enregistrement permet d'authentifier l'objet portable (1) et de vérifier que l'utilisateur (2) est bien le titulaire de l'objet portable (1) ;
ledit procédé comprenant en outre :
- l'étape, pour ledit terminal (8), de lire dans ledit objet portable (1) et de transmettre audit serveur (9) des données d'identification (20),
- l'étape, pour ledit utilisateur (2), sur requête dudit terminal (8), de composer, au moyen d'un clavier (12) dudit terminal (8), le numéro d'appel (13) associé audit terminal mobile (25) ; ledit numéro d'appel (13) associé audit terminal mobile (25) étant transmis, par ledit terminal (8), audit serveur (9) ;
ledit procédé comprenant en outre :
- l'étape, pour ledit terminal (8), de transmettre un mot de passe (15) audit utilisateur (2) ; ledit mot de passe (15) ayant été déterminé par ledit serveur (9) et transmis audit terminal (8) ;
de sorte que ledit mot de passe (15) attribué par le serveur (9) ne peut être transmis qu'audit utilisateur (2) titulaire dudit objet portable (1) authentifié ;
ledit procédé comprenant en outre, lors de ladite phase d'enregistrement :
- l'étape, pour ledit serveur (9), de mémoriser et d'associer, dans ladite base de données (10) dudit organisme (7) :
• lesdites données d'identification (20),
• ledit numéro d'appel (13) associé audit terminal mobile (25),
• ledit mot de passe (15) ;
ledit procédé comprenant en outre, pour permettre audit utilisateur (2) de demander et d'obtenir un certificat (55) auprès dudit organisme (7), les étapes suivantes :
- l'étape, pour ledit utilisateur (2), de transmettre une demande de certificat (56) audit organisme (7) :
• en actionnant ladite application de demande de certificat (52) de ladite carte SIM (48),
• en saisissant sur ledit clavier terminal mobile (76) ledit mot de passe (15),
• en structurant, au moyen de ladite application de demande de certificat (52), un message (18) contenant ledit numéro d'appel (13) et ledit mot de passe (15),
• en saisissant sur le clavier terminal mobile (76) un mot de passe de signature (51) ; ledit mot de passe de signature (51) ainsi saisi étant comparé avec ledit mot de passe de signature (51) de ladite carte SIM (48) ;
ledit mot de passe de signature (51) activant ledit mécanisme de signature (53) :
- pour produire une signature (58), et
- pour produire un message signé (59) composé dudit message (18) et de ladite signature (58) ainsi obtenue, en mettant en oeuvre ladite clé privée de signature (49), et
- pour transmettre ledit message signé (59) audit organisme (7) ;
ledit procédé comprenant en outre, pour ledit organisme (7), les étapes suivantes :
- l'étape de vérifier que ledit numéro d'appel (13) et ledit mot de passe (15) ainsi transmis ont bien été mémorisés lors de la phase d'enregistrement et sont associés dans ladite base de données (10) dudit organisme (7),
- l'étape d'extraire, de ladite base de données (10), lesdites données d'identification (20), correspondant audit numéro d'appel (13) et audit mot de passe (15), notamment le numéro et la date d'expiration dudit objet portable (1) ainsi que le nom et le prénom du titulaire dudit objet portable (1),
- l'étape de rechercher la clé publique de signature (50) associée audit numéro d'appel (13),
- l'étape de vérifier ladite signature (58) au moyen de ladite clé publique de signature (50) ;
ledit procédé comprenant en outre :
- l'étape de fabriquer un certificat (55) en utilisant tout ou partie desdites données d'identification (20) et ladite clé publique de signature (50),
- l'étape de mémoriser et d'associer avec ledit numéro d'appel (13) et ledit mot de passe (15), dans ladite base de données (10) dudit organisme (7), ledit certificat (55) et une référence de certificat (60) dudit certificat (55),
- l'étape de transmettre audit terminal mobile (25), en réponse à la demande de certificat (56), ladite référence de certificat (60) et une requête d'activation (61) de ladite application de demande de certificat (52),
- l'étape, pour ledit terminal mobile (25), d'activer ladite application de demande de certificat (52),
- l'étape, pour ladite application de demande de certificat (52), de mémoriser ladite référence de certificat (60) dans ladite carte SIM (48) ;
ledit procédé comprenant en outre lors d'une phase de paiement :
- l'étape, pour ledit utilisateur (2), de transmettre audit accepteur (23) ledit numéro d'appel (13) associé audit terminal mobile (25) ;
- l'étape, pour ledit accepteur (23), de transmettre audit organisme (7) ledit numéro d'appel (13) associé audit terminal mobile (25) ainsi que des informations relatives audit paiement (62), dont le montant dudit paiement,
- l'étape, pour ledit organisme (7) d'adresser audit terminal mobile (25) dudit utilisateur (2) un message de demande de paiement (63) en utilisant ledit numéro d'appel (13) associé audit terminal mobile (25) ; ledit message de demande paiement (63) comprenant :
• lesdites informations relatives audit paiement (62),
• une requête d'activation de l'application de paiement (77),
- l'étape, pour ledit terminal mobile (25), d'activer ladite application de paiement (54),
- l'étape, pour ladite application de paiement (54) ainsi activée, d'afficher lesdites informations relatives audit paiement (62) ainsi que lesdites références de certificat (60) mémorisées dans ladite carte SIM (48),
- l'étape, pour ledit utilisateur , de sélectionner, au moyen dudit clavier terminal mobile (76), en cas de choix multiples, une référence de certificat (60) à utiliser pour effectuer ledit paiement,
- l'étape, pour ladite application de paiement (54), d'afficher un champ de saisie (19) dudit mot de passe de signature (51),
- l'étape, pour ledit utilisateur (2), de donner son accord concernant ledit paiement en saisissant ledit mot de passe de signature (51), dans ledit champ de saisie (19), au moyen dudit clavier terminal mobile (76),
- l'étape, pour ladite application de paiement (54), de contrôler ledit mot de passe de signature (51) ainsi saisi en le comparant avec ledit mot de passe de signature (51) de ladite carte SIM (48),
- l'étape, pour ladite application de paiement (54) :
• (i) de structurer un message de paiement (66) contenant ladite référence de certificat (60) et des données de paiement, au moins en partie constituées à partir desdites informations relatives audit paiement (62),
• (ii) de signer ledit message de paiement (66), en mettant en oeuvre ladite clé privée de signature (49),
• (iii) de produire un message de paiement signé (67) composé dudit message de paiement (66) et de ladite signature (58) ainsi obtenue, et
• (iv) de renvoyer audit organisme (7) ledit message de paiement signé (67) ainsi produit,
- l'étape, pour ledit organisme (7), d'extraire de ladite base de données (10), ledit certificat (55) et tout ou partie desdites données d'identification (20) correspondant audit numéro d'appel (13) associé audit terminal mobile (25) et à ladite référence de certificat (60),
- l'étape, pour ledit organisme (7), de vérifier la signature (58) dudit message de paiement signé (67) en mettant en oeuvre ladite clé publique de signature (50) dudit certificat (55),
- l'étape, pour ledit organisme (7), de vérifier que ledit certificat (55) correspond audit utilisateur (2) ayant transmis audit accepteur (23) ledit numéro d'appel (13) associé audit terminal mobile (25) et de vérifier que ledit message de paiement signé (67) ainsi renvoyé correspond audit message de demande de paiement (63),
- l'étape, pour ledit organisme (7) :
• de faire débiter ou débiter un compte bancaire associé audit objet portable (1) du montant dudit paiement et de faire créditer ou créditer ledit accepteur (23) dudit montant,
• de confirmer auprès dudit accepteur (23) ledit paiement à distance dudit utilisateur (2) ;
de sorte que le paiement est acquitté à distance par l'utilisateur (2) sans qu'il ait eu à communiquer à l'accepteur (23) les données d'identification (20) de l'objet portable (1).

2. Procédé selon la revendication 1 ; ledit procédé comprenant, outre ledit mode avancé faisant l'objet de la revendication 1, un mode de base et un processus de sélection automatique du mode approprié ; la phase d'enregistrement du mode de base étant identique à la phase d'enregistrement du mode avancé ; ledit processus de sélection automatique comprenant l'étape de déterminer si ledit paiement peut être effectué selon ledit mode avancé ou s'il doit être effectué selon ledit mode de base ; ladite détermination pouvant être effectuée au cours de ladite phase de paiement et/ou au cours du processus de demande et de délivrance de certificat (55) ;
dans le cas où ledit paiement ne peut pas être effectué selon ledit mode avancé, les étapes du processus de demande de délivrance de certificat (55) et les étapes du processus de la phase de paiement dudit mode avancé sont substituées par les étapes suivantes dudit mode de base, lors de la phase de paiement :
- l'étape, pour ledit utilisateur (2), de transmettre audit accepteur (23) ledit numéro d'appel (13) associé audit terminal mobile (25) ;
- l'étape, pour ledit accepteur (23), de transmettre audit organisme (7) ledit numéro d'appel (13) associé audit terminal mobile (25) ainsi que des informations relatives audit paiement (62), dont le montant dudit paiement,
- l'étape, pour ledit organisme (7) d'adresser audit utilisateur (2) un message de saisie (75) en utilisant ledit numéro d'appel (13) associé audit terminal mobile (25) ; ledit message de saisie (75) comprenant :
• lesdites informations relatives audit paiement (62),
• une requête de saisie dudit mot de passe (68) dans ledit message de saisie (75),
- l'étape, pour ledit utilisateur (2), de transmettre en retour ledit mot de passe (15) audit organisme (7),
- l'étape, pour ledit organisme (7), de vérifier dans ladite base de données (10) que ledit mot de passe (15), transmis par ledit utilisateur (2), correspond audit numéro d'appel (13) associé audit terminal mobile (25) transmis par ledit accepteur (23),
- l'étape, pour ledit organisme (7) :
• de rechercher, dans ladite base de données (10), tout ou partie desdites données d'identification (20) correspondant audit numéro d'appel (13) associé audit terminal mobile (25) et audit mot de passe (15),
• de faire débiter ou débiter un compte bancaire associé audit objet portable (1) du montant dudit paiement et de faire créditer ou créditer ledit accepteur (23) dudit montant,
• de confirmer auprès dudit accepteur (23) ledit paiement à distance dudit utilisateur (2) ;
de sorte que le paiement est acquitté à distance par l'utilisateur (2) sans qu'il ait eu à communiquer à l'accepteur (23) les données d'identification (20) de l'objet portable (1), notamment le numéro et de la date d'expiration de la carte bancaire (5) de l'utilisateur (2).

3. Procédé selon la revendication 2 ; ledit procédé étant tel que pour déterminer si ledit paiement peut être effectué selon ledit mode avancé ou s'il doit être effectué selon ledit mode de base, ledit organisme (7) détecte qu'une clé publique de signature (50) est associée audit numéro d'appel (13) soit que cette information provienne dudit opérateur de téléphonie (69) soit qu'elle provienne dudit terminal mobile (25) ;
de sorte que ledit organisme (7) peut, selon les options qu'il entend privilégier :
soit inviter ledit utilisateur (2) à demander un certificat (55) de manière qu'il puisse accéder audit mode avancé,
soit accepter que ledit utilisateur (2) puisse continuer à effectuer des paiements à distance selon ledit mode de base.

4. Procédé selon la revendication 3 ; ledit procédé étant tel que ladite détection intervient, au cours de ladite phase de paiement en mode de base, lors de la transmission par ledit accepteur (23) audit organisme (7) dudit numéro d'appel (13) associé audit terminal mobile (25).

5. Procédé selon l'une quelconque des revendications 3 ou 4 ; ledit procédé comprenant en outre l'étape pour ledit organisme (7) de bloquer la mise en oeuvre dudit mode de base dans le cas où ledit organisme (7) détecte qu'une clé publique de signature (50) est associée audit numéro d'appel (13) ;
de sorte que ledit utilisateur (2) n'a pas d'autre solution pour effectuer des paiements à distance que de demander un certificat (55) selon ledit mode avancé.

6. Procédé selon la revendication 5 ; ledit procédé comprenant en outre l'étape, pour ledit organisme (7), de contrôler qu'un utilisateur (2) demandant un certificat (55) n'utilise pas un mot de passe (15) ayant déjà été utilisé en paiement en mode de base en association avec ledit numéro d'appel (13) dudit utilisateur (2);
de sorte que les risques de compromission de mots de passe sont réduits ;
de sorte que le niveau de sécurité est optimisé en mode avancé.

7. Procédé selon l'une des revendications précédentes dans lequel, lors de la phase d'enregistrement, l'étape pour le terminal (8) de transmettre un mot de passe (15) à l'utilisateur (2) comprend l'affichage du mot de passe (15) sur un écran (16) du terminal (8) et/ou la délivrance audit utilisateur (2) d'un ticket (17) sur lequel est imprimé ledit mot de passe (15).

8. Système destiné à permettre à un utilisateur (2), disposant d'un objet portable (1) et d'un terminal mobile (25) ayant une fonction de téléphonie, d'effectuer un paiement à distance auprès d'un accepteur (23) ;
ledit système étant tel qu'il permet un mode avancé comportant trois phases :
- une phase d'enregistrement
- un processus de demande et de délivrance de certificat (55)
- une phase de paiement ;
ledit système comprenant, pour permettre l'enregistrement dudit utilisateur (2) auprès d'un organisme (7) :
- un terminal (8) comportant des moyens d'accouplements (26) permettant audit utilisateur (2), d'accoupler ledit objet portable (1) audit terminal (8),
- un serveur (9) associé à une base de données (10) dudit organisme (7) ;
ledit serveur (9) comprenant des moyens de connexion (27) pour connecter, de manière directe ou indirecte, ledit terminal (8) audit serveur (9) via un réseau de communication (28) ;
ledit terminal (8) comprenant en outre :
- une interface utilisateur-terminal (29) permettant audit utilisateur (2) d'entrer dans ledit terminal (8), sur requête dudit terminal (8), des données d'authentification (11) dudit utilisateur (2),
- des moyens de vérification terminal (30) pour vérifier que lesdites données d'authentification (11) dudit utilisateur (2), correspondent audit objet portable (1) ;
de sorte que la phase d'enregistrement permet d'authentifier l'objet portable (1) et de vérifier que l'utilisateur (2) est bien le titulaire de l'objet portable (1) ;
ledit terminal (8) comprenant en outre :
- des moyens de lecture terminal (43) permettant de lire dans ledit objet portable (1) des données d'identification (20),
- des moyens de transmission terminal (31) permettant de transmettre lesdites données d'identification (20) audit serveur (9) ;
lesdits moyens de lecture terminal (43) et lesdits moyens de transmission terminal (31) étant mis en oeuvre lors de la phase d'enregistrement dudit utilisateur (2) ;
ledit terminal (8) étant tel que ladite interface utilisateur-terminal (29) comporte un clavier (12) permettant audit utilisateur (2) de composer, sur requête dudit terminal (8), le numéro d'appel (13) associé audit terminal mobile (25) ;
ledit terminal (8) comportant :
- des moyens de transmission terminal (31) pour transmettre audit serveur (9) ledit numéro d'appel (13) associé audit terminal mobile (25),
- des moyens de communication terminal (32) pour communiquer un mot de passe (15) audit utilisateur (2) ;
ledit mot de passe (15) ayant été déterminé par ledit serveur (9) en mettant en oeuvre des moyens de traitement informatique serveur (33) ; ledit mot de passe (15) ayant été transmis par ledit serveur (9) audit terminal (8), via ledit réseau de communication (28) ;
de sorte que ledit mot de passe (15) attribué par le serveur (9) ne peut être transmis qu'audit utilisateur (2) titulaire dudit objet portable (1) authentifié ;
lesdits moyens de traitement informatique serveur (33) comportant des moyens d'enregistrement (34) pour mémoriser et associer dans ladite base de données (10) :
• lesdites données d'identification (20),
• ledit numéro d'appel (13) associé audit terminal mobile (25),
• ledit mot de passe (15) ;
ledit système comprenant en outre des moyens de demande et de délivrance de certificat (55) susceptibles d'être mis en oeuvre par ledit utilisateur (2) et ledit organisme (7) dans le cas où ledit terminal mobile (25) comporte une carte SIM (48) personnalisée par un opérateur de téléphonie (69) mobile ; ladite carte SIM (48) étant associée audit numéro d'appel (13) dudit terminal mobile (25) ; ladite carte SIM (48) contenant :
• une clé privée de signature (49) associée à une clé publique de signature (50),
• un mot de passe de signature (51); ledit mot de passe de signature (51) étant soit un mot de passe de signature (51) d'origine que ledit opérateur de téléphonie (69) a déterminé et transmis audit utilisateur (2), soit un nouveau mot de passe de signature (51) que ledit utilisateur (2) a substitué audit mot de passe de signature (51) d'origine ;
ladite carte SIM (48) comprenant en outre :
• des fonctions cryptographiques,
• une application de demande de certificat (52) comportant un mécanisme de signature (53) mettant en oeuvre ladite clé privée de signature (49),
• une application de paiement (54) ;
ledit organisme (7) disposant de ladite clé publique de signature (50) ;
de sorte que l'organisme (7) est capable d'établir un lien entre le numéro d'appel (13) et la clé publique de signature (50) ;
lesdits moyens de demande et de délivrance de certificat (55) pour demander et obtenir un certificat (55) auprès dudit organisme (7), étant composés de moyens de transmission terminal mobile (74), mis en oeuvre par ledit utilisateur (2), pour transmettre une demande de certificat (56) audit organisme (7), ces moyens étant tels que la demande de certificat puisse être réalisée par l'utilisateur :
• en actionnant ladite application de demande de certificat (52) de ladite carte SIM (48),
• en saisissant sur ledit clavier terminal mobile (76) ledit mot de passe (15),
• en structurant, au moyen de ladite application de demande de certificat (52), un message (18), notamment de type SMS, contenant ledit numéro d'appel (13) et ledit mot de passe (15),
• en saisissant sur ledit clavier terminal mobile (76) un mot de passe signature (51) ; ledit mot de passe de signature (51) ainsi saisi étant comparé avec ledit mot de passe de signature (51) de ladite carte SIM (48) ;
ledit mot de passe de signature (51) activant ledit mécanisme de signature (53) :
- pour signer ledit message (18), et
- pour produire un message signé (59) composé dudit message (18) et de la signature (58) ainsi obtenue, en mettant en oeuvre ladite clé privée de signature (49), et
- pour transmettre ledit message signé (59) audit organisme (7) ;
lesdits moyens de demande et de délivrance de certificat (55) pour demander et obtenir un certificat (55) auprès dudit organisme (7), étant en outre composés :
- de moyens de vérification serveur (39), mis en oeuvre par ledit organisme (7), pour vérifier que ledit numéro d'appel (13) et ledit mot de passe (15) ainsi transmis ont bien été mémorisés lors de la phase d'enregistrement et sont associés dans ladite base de données (10) dudit organisme (7),
- desdits moyens de traitement informatique serveur (33) mis en oeuvre par ledit organisme (7) et agencés pour extraire, de ladite base de données (10), lesdites données d'identification (20), correspondant audit numéro d'appel (13) et audit mot de passe (15), notamment le numéro et la date d'expiration dudit objet portable (1) ainsi que le nom et le prénom du titulaire dudit objet portable (1),
- desdits moyens de traitement informatique serveur (33) mis en oeuvre par ledit organisme (7) et agencés pour rechercher la clé publique de signature (50) associée audit numéro d'appel (13),
- desdits moyens de traitement informatique serveur (33) mis en oeuvre par ledit organisme (7) et agencés pour vérifier ladite signature (58) au moyen de ladite clé publique de signature (50) ;
lesdits moyens de demande et de délivrance de certificat (55) pour demander et obtenir un certificat (55) auprès dudit organisme (7), étant en outre composés :
- de moyens de production serveur (70) pour fabriquer un certificat (55) tout ou partie desdites données d'identification (20) et ladite clé publique de signature (50),
- desdits moyens de traitement informatique serveur (33) mis en oeuvre par ledit organisme (7) et agencés pour mémoriser et associer avec ledit numéro d'appel (13) et ledit mot de passe (15), dans ladite base de données (10) dudit organisme (7), ledit certificat (55) et une référence de certificat (60) dudit certificat (55),
- desdits moyens de transmission serveur (38) mis en oeuvre par ledit organisme (7) et agencés pour transmettre audit terminal mobile (25), en réponse à la demande de certificat (56), ladite référence de certificat (60) et une requête d'activation (61) de ladite application de demande de certificat (52),
- dudit terminal mobile (25) agencé pour activer ladite application de demande de certificat (52),
- de ladite application de demande de certificat (52) agencée pour mémoriser ladite référence de certificat (60) dans ladite carte SIM (48) ;
ledit système comprenant des moyens de transmission accepteur (44) permettant audit utilisateur (2), de transmettre audit accepteur (23) ledit numéro d'appel (13) associé audit terminal mobile (25) ;
ledit serveur (9) dudit organisme (7) comprenant en outre :
- des moyens de réception serveur (37) pour recevoir dudit accepteur (23) ledit numéro d'appel (13) associé audit terminal mobile (25) ainsi que des informations relatives audit paiement (62), dont le montant dudit paiement,
- des moyens de transmission serveur (38) pour adresser audit terminal mobile (25) dudit utilisateur (2) un message de demande de paiement (63) en utilisant ledit numéro d'appel (13) associé audit terminal mobile (25) ;
ledit message de demande de paiement (63) comprenant lesdites informations relatives audit paiement (62) et une requête d'activation de l'application de paiement (77) ;
ledit terminal mobile (25) étant agencé pour activer ladite application de paiement (54) ;
ladite application de paiement (54) ainsi activée étant agencée pour afficher lesdites informations relatives audit paiement (62) ainsi que lesdites références de certificat (60) mémorisées dans ladite carte SIM (48) ;
ledit terminal mobile (25) étant agencé pour que ledit utilisateur (2) puisse sélectionner, au moyen dudit clavier terminal mobile (76), en cas de choix multiples, une référence de certificat (60) à utiliser pour effectuer ledit paiement ;
ladite application de paiement (54) étant agencée pour afficher un champ de saisie (19) dudit mot de passe de signature (51) de sorte que ledit utilisateur (2) puisse donner son accord concernant ledit paiement en saisissant ledit mot de passe de signature (51), dans ledit champ de saisie (19), au moyen dudit clavier terminal mobile (76) ;
ladite application de paiement (54) étant agencée pour contrôler ledit mot de passe de signature (51) ainsi saisi en le comparant avec ledit mot de passe de signature (51) de ladite carte SIM (48) ;
ladite application de paiement (54) étant agencée pour :
• (i) structurer un message de paiement (66), notamment de type SMS, contenant ladite référence de certificat (60) et des données de paiement, au moins en partie constituées à partir desdites informations relatives audit paiement (62), notamment le montant dudit paiement, la date dudit paiement, une référence de transaction, une identification dudit accepteur (23),
• (ii) produire une signature (58) en mettant en oeuvre ladite clé privée de signature (49),
• (iii) produire un message de paiement signé (67) composé dudit message de paiement (66) et de ladite signature (58) ainsi obtenue, et
• (iv) renvoyer audit serveur (9) dudit organisme (7), via lesdits moyens de transmission terminal mobile (74), ledit message de paiement signé (67) ainsi produit ;
lesdits moyens de traitement informatique serveur (33) dudit organisme (7) étant agencés pour extraire de ladite base de données (10), ledit certificat (55) et tout ou partie desdites données d'identification (20), notamment ledit numéro et ladite date d'expiration dudit objet portable (1), correspondant audit numéro d'appel (13) associé audit terminal mobile (25) et à ladite référence de certificat (60) ;
lesdits moyens de traitement informatique serveur (33) dudit organisme (7) étant agencés pour vérifier ladite signature (58) dudit message de paiement signé (67) en mettant en oeuvre ladite clé publique de signature (50) dudit certificat (55) ;
lesdits moyens de traitement informatique serveur (33) dudit organisme (7) étant agencés pour vérifier que ledit certificat (55) correspond audit utilisateur (2) ayant transmis audit accepteur (23) ledit numéro d'appel (13) associé audit terminal mobile (25) et pour vérifier que ledit message de paiement signé (67) ainsi renvoyé correspond audit message de demande de paiement (63) ;
lesdits moyens de traitement informatique serveur (33) dudit organisme (7) étant agencés pour :
• faire débiter ou débiter un compte bancaire associé audit objet portable (1) du montant dudit paiement et de faire créditer ou créditer ledit accepteur (23) dudit montant,
• confirmer auprès dudit accepteur (23) ledit paiement à distance dudit utilisateur (2) ;
de sorte que le paiement est acquitté à distance par l'utilisateur (2) sans qu'il ait eu à communiquer à l'accepteur (23) les données d'identification (20) de l'objet portable (1), notamment le numéro et la date d'expiration de la carte bancaire (5) de l'utilisateur (2).

9. Système selon la revendication 8 ; ledit système comprenant, outre des moyens de mise en oeuvre dudit mode avancé faisant l'objet de la revendication 8, un mode de base et un processus de sélection automatique du mode approprié ; les moyens mis en oeuvre lors de la phase d'enregistrement du mode de base étant identique aux moyens mis en oeuvre lors de la phase d'enregistrement du mode avancé ; lesdits moyens de traitement informatique serveur (33) étant agencés pour déterminer si ledit paiement peut être effectué selon ledit mode avancé ou s'il doit être effectué selon ledit mode de base ; ladite détermination pouvant être effectuée au cours de ladite phase de paiement et/ou au cours du processus de demande et de délivrance de certificat (55) ; dans le cas où ledit paiement ne peut pas être effectué selon ledit mode avancé, lesdits moyens mis en oeuvre lors du processus de demande de délivrance de certificat (55) et lors du processus de la phase de paiement dudit mode avancé étant substitués par les moyens ci-après spécifiés plus particulièrement agencés au paiement en mode de base ;
ledit système comprend en outre des moyens de transmission accepteur (44) permettant audit utilisateur (2) de transmettre audit accepteur (23) ledit numéro d'appel (13) associé audit terminal mobile (25) ;
lesdits moyens de réception serveur (37) dudit serveur (9) dudit organisme (7) sont agencés pour recevoir dudit accepteur (23) ledit numéro d'appel (13) associé audit terminal mobile (25) ainsi que des informations relatives audit paiement (62), dont le montant dudit paiement ;
lesdits moyens de réception serveur (37) dudit serveur (9) dudit organisme (7) sont agencés pour adresser audit utilisateur (2) un message de saisie (75) en utilisant ledit numéro d'appel (13) associé audit terminal mobile (25) ;
ledit message de saisie (75) comprenant lesdites informations relatives audit paiement (62) et une requête de saisie dudit mot de passe (68) ; lesdits moyens de transmission terminal mobile (74) étant agencés pour permettre audit utilisateur (2) de transmettre en retour ledit mot de passe (15) audit serveur (9) dudit organisme (7) ;
lesdits moyens de traitement informatique serveur (33) étant agencés pour vérifier dans ladite base de données (10) que ledit mot de passe (15), transmis par ledit utilisateur (2), correspond audit numéro d'appel (13) associé audit terminal mobile (25) transmis par ledit accepteur (23) ;
lesdits moyens de traitement informatique serveur (33) étant agencés pour rechercher dans ladite base de données (10) tout ou partie desdites données d'identification (20) correspondant audit numéro d'appel (13) associé audit terminal mobile (25) et audit mot de passe (15) ;
lesdits moyens de traitement informatique serveur (33) étant agencés pour faire débiter ou débiter un compte bancaire associé audit objet portable (1) du montant dudit paiement et de faire créditer ou créditer ledit accepteur (23) dudit montant ;
lesdits moyens de traitement informatique serveur (33) étant agencés pour confirmer auprès dudit accepteur (23) ledit paiement à distance dudit utilisateur (2) ;
de sorte que le paiement est acquitté à distance par l'utilisateur (2) sans qu'il ait eu à communiquer à l'accepteur (23) les données d'identification (20) de l'objet portable (1), notamment le numéro et de la date d'expiration de la carte bancaire (5) de l'utilisateur (2).

10. Système selon la revendication 9 ; ledit système étant tel que pour déterminer si ledit paiement peut être effectué selon ledit mode avancé ou s'il doit être effectué selon ledit mode de base, lesdits moyens de traitement informatique serveur (33) dudit organisme (7) détectent si une clé publique de signature (50) est associée audit numéro d'appel (13) soit que cette information provienne dudit opérateur de téléphonie (69) soit qu'elle provienne dudit terminal mobile (25) ;
de sorte que ledit organisme (7) peut, selon les options qu'il entend privilégier :
soit inviter ledit utilisateur (2) à demander un certificat (55) de manière qu'il puisse accéder audit mode avancé,
soit accepter que ledit utilisateur (2) puisse continuer à effectuer des paiements à distance selon ledit mode de base.

11. Système selon la revendication 10 ; ledit système étant tel que ladite détection par lesdits moyens de traitement informatique serveur (33) intervient, au cours de ladite phase de paiement en mode de base, lors de la transmission par ledit accepteur (23) audit organisme (7) dudit numéro d'appel (13) associé audit terminal mobile (25).

12. Système selon l'une quelconque des revendications 10 ou 11 ; lesdits moyens de traitement informatique serveur (33) comprenant en outre des moyens de verrouillage (72) pour bloquer la mise en oeuvre dudit mode de base dans le cas où ledit organisme (7) détecte qu'une clé publique de signature (50) est associée audit numéro d'appel (13) ;
de sorte que ledit utilisateur (2) n'a pas d'autre solution pour effectuer des paiements à distance que de demander un certificat (55) selon ledit mode avancé.

13. Système selon la revendication 12 ; lesdits moyens de traitement informatique serveur (33) comprenant en outre des moyens de contrôle (73) pour contrôler qu'un utilisateur (2) demandant un certificat (55) n'utilise pas un mot de passe (15) ayant déjà été utilisé en paiement en mode de base en association avec ledit numéro d'appel (13) dudit utilisateur (2) ;
de sorte que les risques de compromission de mots de passe sont réduits ;
de sorte que le niveau de sécurité est optimisé en mode avancé.

## Patentansprüche

1. Verfahren, das dazu bestimmt ist, einem Anwender (2), der über ein tragbares Objekt (1) und ein Mobilfunk-Datenendgerät (25) mit Fernsprech-Funktion verfügt, eine Fernzahlung bei einem Empfänger (23) zu ermöglichen; wobei das Mobilfunk-Datenendgerät (25) eine von einem Mobilfunkbetreiber kundenspezifisch gemachte SIM-Karte (48) aufweist, die SIM-Karte (48) der Kennziffer (13) des Mobilfunk-Datenendgeräts (25) zugeordnet ist, und die SIM-Karte (48) beinhaltet:
• eine persönliche Signatur-Verschlüsselung (49), die einer öffentlichen Signatur-Verschlüsselung (50) zugeordnet ist,
• ein Signatur-Passwort (51), wobei das Signatur-Passwort (51) entweder ein ursprüngliches Signatur-Passwort (51) ist, das der Mobilfunkbetreiber (69) festgelegt und dem Anwender (2) übermittelt hat, oder ein neues Signatur-Passwort (51) ist, das der Anwender (2) an die Stelle des ursprünglichen Signatur-Passworts (51) gesetzt hat; wobei die SIM-Karte (48) ferner umfasst:
• Verschlüsselungsfunktionen,
• eine Anwendung einer Bescheinigungsanforderung (52), die einen Signatur-Mechanismus (53) aufweist, der die persönliche Signaturverschlüsselung (49) benutzt,
• eine Zahlungsanwendung (54),
• eine Organisation (7), die über die öffentliche Signaturverschlüsselung (50) verfügt,
so dass die Organisation (7) in der Lage ist, einen Zusammenhang zwischen der Kennziffer (13) und der öffentlichen Signaturverschlüsselung (50) herzustellen;
wobei das Verfahren einen fortgeschrittenen Modus umfasst, der drei Phasen aufweist:
- eine Phase der Registrierung,
- einen Vorgang der Anforderung und der Aushändigung der Bescheinigung,
- eine Phase der Zahlung;
in der Phase der Registrierung des Anwenders (2) bei der Organisation (7):
- für den Anwender (2) die Stufe des Ankoppeln des tragbaren Objekts (1) an ein Datenendgerät (8), wobei das Datenendgerät (8) direkt oder indirekt an einen Server (9) angeschlossen ist, der einer Datenbank (10) der Organisation (7) zugeordnet ist;
wobei das Verfahren ferner während der Phase der Registrierung umfasst:
- für den Anwender (2) die Stufe, auf Anforderung des Datenendgeräts (8) in das Datenendgerät (8) die dem tragbaren Objekt (1) zugeordneten Beurkundungsdaten (11) des Anwenders (2) einzugeben,
- für das Datenendgerät (8) die Stufe der Überprüfung, ob die Beurkundungsdaten (11) des Anwenders (2) dem tragbaren Objekt (1) entsprechen;
so dass es die Phase der Registrierung ermöglicht, das tragbare Objekt (1) zu beurkunden und zu überprüfen, ob der Anwender (2) der wahre Inhaber des tragbaren Objekts (1) ist;
wobei das Verfahren ferner umfasst:
- für das Datenendgerät (8) die Stufe des Lesens im tragbaren Objekt (1) und der Übermittlung der Kenndaten (20) an den Server (9);
- für den Anwender (2) die Stufe, auf Anforderung seitens des Datenendgeräts (8) über eine Tastatur (12) des Datenendgeräts (8) die dem Mobilfunk-Datenendgerät (25) zugeordnete Kennziffer (13) einzugeben; wobei diese dem Mobilfunk-Datenendgerät (25) zugeordnete Kennziffer (13) von dem Datenendgerät (8) an den Server (9) übertragen wird;
wobei das Verfahren ferner umfasst:
- für das Datenendgerät (8) die Stufe der Übertragung eines Passworts (15) an den Anwender (2), wobei das Passwort (15) vom Server (9) bestimmt und auf das Datenendgerät (8) übertragen wurde;
so dass das vom Server (9) zugewiesene Passwort (15) ausschließlich an den Anwender (2) als Inhaber des beurkundeten tragbaren Objekts (1) übertragen werden kann;
wobei das Verfahren ferner in der Registrierungsphase umfasst:
- für den Server (9) die Stufe des Abspeicherns und Zuordnens in der Datenbank (10) der Organisation (7):
• der Kenndaten (20),
• der dem Mobilfunk-Datenendgerät (25) zugeordneten Kennziffer (13),
• des Passworts (15);
wobei das Verfahren ferner, um es dem Anwender (2) zu ermöglichen, von der Organisation (7) eine Bescheinigung (55) anzufordern und zu erhalten, die folgenden Stufen umfasst:
- für den Anwender (2) die Stufe der Übertragung einer Anforderung der Bescheinigung (56) an die Organisation (7):
• durch Aktivieren der Anwendung zur Bescheinigungsanforderung (52) von der SIM-Karte (48),
• durch Eingeben des Passworts (15) auf der Tastatur des Mobilfunk-Datenendgeräts (76),
• durch Zusammenstellen einer Meldung (18), die die Kennziffer (13) und das Passwort (15) enthält, mittels der Anwendung der Bescheinigungsanforderung (52),
• durch Eingeben eines Signatur-Passworts (51) auf der Tastatur des Mobilfunk-Datenendgeräts (76); wobei das so eingegebene Signatur-Passwort (51) mit dem Signatur-Passwort (51) der SIM-Karte (48) verglichen wird;
wobei das Signatur-Passwort (51) den Signaturmechanismus (53) aktiviert:
- zum Erzeugen einer Signatur (58), und
- zum Erzeugen einer signierten Meldung (59), die sich aus der Meldung (18) und der auf diese Weise erhaltenen Signatur (58) zusammensetzt, indem die persönliche Signatur-Verschlüsselung (49) benutzt wird, und
- zum Übertragen der signierten Meldung (59) an die Organisation (7);
wobei das Verfahren für die Organisation (7) ferner die folgenden Stufen umfasst:
- die Stufe der Überprüfung, ob die so übertragene Kennziffer (13) und das so übertragene Passwort (15) in der Registrierungsphase richtig abgespeichert und in die Datenbank (10) der Organisation (7) eingeordnet wurden,
- die Stufe des Abrufens der Kenndaten (20) entsprechend der Kennziffer (13) und dem Passwort (15) von der Datenbank (10), insbesondere die Nummer und das Verfallsdatum des tragbaren Objekts (1) sowie Namen und Vornamen des Inhabers des tragbaren Objekts (1),
- die Stufe des Suchens der öffentlichen Signatur-Verschlüsselung (50), die der Kennziffer (13) zugeordnet ist;
- die Stufe der Überprüfung der Signatur (58) mittels der öffentlichen Signatur-Verschlüsselung (50);
wobei das Verfahren ferner umfasst:
- die Stufe der Herstellung einer Bescheinigung (55) unter Verwendung aller oder eines Teils der Kenndaten (20) und der öffentlichen Signatur-Verschlüsselung (50),
- die Stufe des Abspeicherns und der Zuordnung der Bescheinigung (55) und eines Bescheinigungshinweises (60) der Bescheinigung (55) zur Kennziffer (13) und zum Passwort (15) in der Datenbank (10) der Organisation (7),
- die Stufe der Übertragung des Bescheinigungshinweises (60) und einer Aufforderung zur Aktivierung (61) der Anwendung der Bescheinigungsanforderung (52) an das Mobilfunk-Datenendgerät (25) als Antwort auf die Anforderung der Bescheinigung (56),
- für das Mobilfunk-Datenendgerät (25), die Stufe der Aktivierung der Anwendung der Bescheinigungsanforderung (52),
- für die Anwendung der Bescheinigungsanforderung (52), die Stufe der Abspeicherung des Bescheinigungshinweises (60) auf der SIM-Karte (48);
wobei das Verfahren ferner in der Zahlungsphase umfasst:
- für den Anwender (2), die Stufe der Übertragung der dem Mobilfunk-Datenendgerät (25) zugeordneten Kennziffer (13) an den Empfänger (23),
- für den Empfänger (23), die Stufe der Übertragung der dem Mobilfunk-Datenendgerät (25) zugeordneten Kennziffer (13) sowie der die Zahlung (62) betreffenden Informationen, darunter den Betrag der Zahlung, an die Organisation (7),
- für die Organisation, (7) die Stufe des Sendens einer Mitteilung der Zahlungsaufforderung (63) an das Mobilfunk-Datenendgerät (25) des Anwenders (2) unter Verwendung der Kennziffer (13), die dem Mobilfunk-Datenendgerät (25) zugeordnet ist, wobei die Mitteilung der Zahlungsaufforderung (63) umfasst:
• die Informationen, welche die Zahlung (62) betreffen,
• eine Aufforderung zur Aktivierung der Anwendung der Zahlung (77),
- für das Mobilfunk-Datenendgerät (25), die Stufe der Aktivierung der Anwendung der Zahlung (54),
- für die so aktivierte Anwendung der Zahlung (54), die Stufe des Anzeigens der Informationen, welche die Zahlung (62) betreffen, sowie der Bescheinigungshinweise (60), die auf der SIM-Karte (48) abgespeichert sind,
- für den Anwender, die Stufe des Auswählens eines Bescheinigungshinweises (60) mittels der Tastatur des Mobilfunk-Datenendgeräts (76) im Falle einer Mehrfachwahlmöglichkeit anzuwenden, um die Zahlung durchzuführen,
- für die Anwendung der Zahlung (54), die Stufe des Anzeigens eines Eingabefeldes (19) für das Signatur-Passwort (51),
- für den Anwender (2), die Stufe des Gebens seines Einverständnisses zur Zahlung, durch Eingeben seines Signatur-Passworts (51) in das Eingabefeld (19) mittels der Tastatur des Mobilfunk-Datenendgeräts (76),
- für die Anwendung der Zahlung (54), die Stufe der Kontrolle des so eingegebenen Signatur-Passworts (51) durch Vergleich mit dem Signatur-Passwort (51) auf der SIM-Karte (48),
- für die Anwendung der Zahlung (54) die Stufe
• (i) des Abfassens einer Zahlungsmitteilung (66), die den Bescheinigungshinweis (60) und die Zahlungsdaten enthalten, die sich mindestens teilweise aus den Informationen, welche die Zahlung (62) betreffen, zusammensetzen,
• (ii) der Signierung der Zahlungsmitteilung (66) durch Anwenden der privaten Signatur-Verschlüsselung (49),
• (iii) des Erzeugens einer signierten Zahlungsmitteilung (67), die sich aus der Zahlungsmitteilung (66) und der auf diese Weise erhaltenen Signatur (58) zusammensetzt, und
• (iv) des Sendens der so erzeugten signierten Zahlungsmitteilung (67) an die Organisation (7),
- für die Organisation (7), die Stufe des Abrufens der Bescheinigung (55) und aller oder eines Teils der Kenndaten (20) aus der Datenbank (10), entsprechend der dem Mobilfunk-Datenendgerät (25) zugeordneten Kennziffer (13) und dem Bescheinigungshinweis (60),
- für die Organisation (7), die Stufe der Überprüfung der Signatur (58) der signierten Zahlungsmitteilung (67) durch Verwenden der öffentlichen Signatur-Verschlüsselung (50) der Bescheinigung (55),
- für die Organisation (7), die Stufe der Überprüfung, ob die Bescheinigung (55) dem Anwender (2) entspricht, der die dem Mobilfunk-Datenendgerät (25) zugeordnete Kennziffer (13) an den Empfänger (23) übermittelt hat, und Überprüfung, ob die so zurückgesendete signierte Zahlungsmitteilung (67) der Zahlungsaufforderungsmitteilung (63) entspricht,
- für die Organisation (7), die Stufe:
• ein dem tragbaren Objekt (1) zugeordnetes Bankkonto mit dem Betrag der Zahlung zu belasten oder belasten zu lassen und einem Bankkonto des Empfängers (23) den Betrag gutzuschreiben oder gutschreiben zu lassen,
• dem Empfänger (23) die Fernzahlung des Anwenders (2) zu bestätigen;
so dass die Zahlung vom Anwender (2) fernquittiert wird, ohne dass er dem Empfänger (23) die Kenndaten (20) des tragbaren Objekts (1) mitteilen muss.

2. Verfahren gemäß Anspruch 1, wobei das Verfahren, zusätzlich zu dem fortgeschrittenen Modus, der Gegenstand des Anspruchs 1 ist, einen Grundmodus und einen Vorgang der automatischen Auswahl des geeigneten Modus umfasst, wobei die Phase der Registrierung des Grundmodus identisch mit der Phase der Registrierung des fortgeschrittenen Modus ist; wobei der automatische Auswahlvorgang die Stufe zum Bestimmen umfasst, ob die Zahlung gemäß dem fortgeschrittenen Modus ausgeführt werden kann oder gemäß dem Grundmodus ausgeführt werden muss; wobei die Bestimmung im Verlauf der Zahlungsphase und/oder im Verlauf des Vorgangs des Anforderns und der Aushändigung der Bescheinigung (55) ausgeführt werden kann;
für den Fall, dass die Zahlung nicht gemäß dem fortgeschrittenen Modus ausgeführt werden kann, werden die Stufen des Vorgangs zur Anforderung der Aushändigung der Bescheinigung (55) und die Stufen des Vorgangs der Zahlungsphase im fortgeschrittenen Modus durch die nachstehenden Stufen des Grundmodus während der Zahlungsphase ersetzt:
- für den Anwender (2), die Stufe der Übertragung der dem Mobilfunk-Datenendgerät (25) zugeordneten Kennziffer (13) an den Empfänger (23);
- für den Empfänger (23), die Stufe der Übertragung der dem Mobilfunk-Datenendgerät (25) zugeordneten Kennziffer (13) sowie der die Bezahlung (62) betreffenden Informationen, darunter der Betrag der Zahlung, an die Organisation (7),
- für die Organisation (7), die Stufe des Sendens einer Eingabemitteilung (75) an den Anwender (2), unter Verwendung der dem Mobilfunk-Datenendgerät (25) zugeordneten Kennziffer (13), wobei die Eingabemitteilung (75) umfasst:
• die Informationen, welche die Bezahlung (62) betreffen,
• eine Anforderung zur Eingabe des Passworts (68) in der Eingabemitteilung (75),
- für den Anwender (2), die Stufe der Übertragung des Passworts (15) zurück an die Organisation (7),
- für die Organisation (7), die Stufe der Überprüfung in der Datenbank (10), ob das vom Anwender (2) übertragene Passwort (15) der dem Mobilfunk-Datenendgerät (25) zugeordneten und vom Empfänger (23) übertragenen Kennziffer (13) entspricht,
- für die Organisation (7), die Stufe:
• des Suchens nach allen oder nach einem Teil der Kenndaten (20) in der Datenbank (10), die der Kennziffer (13) entsprechen, die dem Mobilfunk-Datenendgerät (25) und dem Passwort (15) zugeordnet sind,
• ein dem tragbaren Objekt (1) zugeordnetes Bankkonto mit dem Betrag der Zahlung zu belasten oder belasten zu lassen und einem Bankkonto des Empfängers (23) den Betrag gutzuschreiben oder gutschreiben zu lassen,
• dem Empfänger (23) die Fernzahlung des Anwenders (2) zu bestätigen;
so dass die Zahlung durch den Anwender (2) fernquittiert wird, ohne dass er dem Empfänger (23) die Kenndaten (20) des tragbaren Objekts (1), insbesondere die Nummer und das Verfallsdatum der Bankkarte (5) des Anwenders (2) mitteilen muss.

3. Verfahren gemäß Anspruch 2, wobei das Verfahren so ausgelegt ist, dass die Organisation (7) beim Festlegen, ob die Zahlung gemäß dem fortgeschrittenen Modus ausgeführt werden kann oder gemäß dem Grundmodus ausgeführt werden muss, entdeckt, ob der Kennziffer (13) eine öffentliche Signatur-Verschlüsselung (50) zugeordnet ist, sei es dass diese Information vom Mobilfunkbetreiber (69), sei es dass sie vom Mobilfunk-Datenendgerät (25) kommt;
so dass die Organisation (7), je nach der Option, die sie bevorzugen will:
entweder den Anwender (2) auffordern kann, eine Bescheinigung (55) anzufordern, so dass er auf den fortgeschrittenen Modus zugreifen kann,
oder akzeptieren kann, dass der Anwender (2) weiterhin die Fernzahlungen gemäß dem Grundmodus durchführen kann.

4. Verfahren gemäß Anspruch 3; wobei das Verfahren so ausgelegt ist, dass die Entdeckung während der Zahlungsphase im Grundmodus bei der Übertragung der dem Datenendgerät (25) zugeordneten Kennziffer (13) durch den Empfänger (23) an die Organisation (7) eintritt.

5. Verfahren gemäß einem beliebigen der Ansprüche 3 oder 4; wobei das Verfahren für die Organisation (7) ferner die Stufe des Blockierens des Benutzens des Grundmodus umfasst, falls die Organisation entdeckt, dass der Kennziffer (13) eine öffentliche Signatur-Verschlüsselung (50) zugeordnet ist,
so dass der Anwender (2) keine andere Lösung zur Durchführung der Fernzahlung hat, als eine Bescheinigung (55) gemäß dem fortgeschrittenen Modus anzufordern.

6. Verfahren gemäß Anspruch 5, wobei das Verfahren für die Organisation (7) ferner die Stufe der Kontrolle umfasst, ob ein Anwender (2), der eine Bescheinigung (55) anfordert, nicht ein Passwort (15) benutzt, das bereits zur Zahlung im Grundmodus zusammen mit der Kennziffer (13) des Anwenders (2) benutzt wurde,
so dass die Risiken der Aufdeckung der Paßwörter reduziert sind;
so dass die Sicherheitshöhe im fortgeschrittenen Modus optimiert wird.

7. Verfahren gemäß einem der vorstehenden Ansprüche, in dem, in der Phase der Registrierung, für das Datenendgerät (8) die Stufe der Übertragung eines Passworts (15) an den Anwender (2) die Anzeige des Passworts (15) auf einem Bildschirm (16) des Datenendgeräts (8) und/oder die Aushändigung eines Tickets (17) an den Anwender (2) umfasst, auf dem das Passwort (15) ausgedruckt ist.

8. System, das dazu bestimmt ist, einem Anwender (2), der über ein tragbares Objekt (1) und ein Mobilfunk-Datenendgerät (25) mit Fernsprech-Funktion verfügt, eine Fernzahlung bei einem Empfänger (23) zu ermöglichen;
wobei das System so ausgelegt ist, dass es einen fortgeschrittenen Modus ermöglicht, der drei Phasen aufweist:
- eine Phase der Registrierung,
- einen Vorgang der Anforderung und der Aushändigung der Bescheinigung (55),
- eine Phase der Zahlung;
wobei das System zur Ermöglichung der Registrierung des Anwenders (2) bei einer Organisation (7) umfasst:
- ein Datenendgerät (8), das Ankopplungsmittel (26) aufweist, die es dem Anwender (2) ermöglichen, das tragbare Objekt (1) an das Datenendgerät (8) anzukoppeln,
- einen einer Datenbank (10) der Organisation (7) zugeordneten Server (9);
wobei der Server (9) Anschlußmittel (27) zum direkten oder indirekten Anschließen des Datenendgeräts (8) über ein Kommunikationsnetz (28) an den Server (9) umfasst;
wobei das Datenendgerät (8) ferner umfasst:
- eine Schnittstelle zwischen dem Anwender und dem Datenendgerät(29), die es dem Anwender (2) ermöglicht, auf Anforderung durch das Datenendgerät (8) Beurkundungsdaten (11) des Anwenders (2) in das Datenendgerät (8) einzugeben,
- Überprüfungsmittel des Datenendgeräts (30) zur Überprüfung, ob die Beurkundungsdaten (11) des Anwenders (2) dem tragbaren Objekt (1) entsprechen;
so dass es die Phase der Registrierung ermöglicht, das tragbare Objekt (1) zu beurkunden und zu überprüfen, ob der Anwender (2) der wahre Inhaber des tragbaren Objekts (1) ist;
wobei das Datenendgerät (8) ferner umfasst:
- Mittel zum Ablesen des Datenendgeräts (43), die es ermöglichen, in dem tragbaren Objekt (1) Kenndaten (20) abzulesen,
- Übertragungsmittel des Datenendgeräts (31), die es ermöglichen, die Kenndaten (20) auf den Server (9) zu übertragen;
wobei die Mittel zum Ablesen des Datenendgeräts (43) und die Übertragungsmittel des Datenendgeräts (31) während der Phase der Registrierung des Anwenders (2) benutzt werden;
wobei das Datenendgerät (8) so ausgelegt ist, dass die Schnittstelle zwischen dem Anwender und dem Datenendgerät(29) eine Tastatur (12) aufweist, die es dem Anwender (2) ermöglicht, bei Aufforderung durch das Datenendgerät (8) die dem Mobilfunk-Datenendgerät (25) zugeordnete Kennziffer (13) einzugeben;
wobei das Datenendgerät (8) aufweist:
- Übertragungsmittel des Datenendgeräts (31) zur Übertragung der dem Mobilfunk-Datenendgerät (25) zugeordneten Kennziffer (13) an den Server (9),
- Kommunikationsmittel des Datenendgeräts (32) zum Mitteilen eines Passworts (15) an den Anwender (2);
wobei das Passwort (15) durch den Server (9) unter Benutzung von Mitteln zur Informationsbearbeitung des Servers (33) bestimmt wurde, wobei das Passwort (15) durch den Server (9) über das Kommunikationsnetz (28) an das Datenendgerät (8) übertragen wurde;
so dass das vom Server (9) zugeteilte Passwort (15) ausschließlich an den Anwender (2) als Inhaber des genehmigten tragbaren Objekts (1) übertragen werden kann;
wobei die Mittel zur Informationsbearbeitung des Servers (33) Registrierungsmittel (34) zur Abspeicherung und Zuordnung in der Datenbank (10) aufweisen:
• die Kenndaten (20),
• die dem Mobilfunk-Datenendgerät (25) zugeordnete Kennziffer (13),
• das Passwort (15);
wobei das System ferner Mittel zur Anforderung und zur Aushändigung der Bescheinigung (55) umfasst, die vom Anwender (2) und von der Organisation (7) benutzt werden können, falls das Mobilfunk-Datenendgerät (25) eine SIM-Karte (48) aufweist, die von einem Mobilfunkbetreiber (69) kundenspezifisch gemacht wurde, und die SIM-Karte (48) der Kennziffer (13) des Mobilfunk-Datenendgeräts (25) zugeordnet wurde, wobei die SIM-Karte (48) beinhaltet:
• eine persönliche Signaturverschlüsselung (49), die einer öffentlichen Signaturverschlüsselung (50) zugeordnet ist,
• ein Passwort für die Signatur (51), wobei das Signatur-Passwort (51) entweder ein ursprüngliches Signatur-Passwort (51), das der Mobilfunkbetreiber (69) festgelegt und dem Anwender (2) übermittelt hat, oder ein neues Signatur-Passwort (51) ist, das der Anwender (2) an die Stelle des ursprünglichen Passworts (51) gesetzt hat;
wobei die SIM-Karte (48) ferner umfasst:
• Verschlüsselungsfunktionen,
• die Anwendung einer Bescheinigungsanforderung (52), die einen Signaturmechanismus (53) aufweist, der die persönliche Signaturverschlüsselung (49) benutzt
• eine Zahlungsanwendung (54),
wobei die Organisation (7) über die öffentliche Signaturverschlüsselung (50) verfügt,
so dass die Organisation (7) in der Lage ist, eine Verbindung zwischen der Kennziffer (13) und der öffentlichen Signaturverschlüsselung (50) herzustellen;
wobei die Mittel zur Anforderung und Aushändigung der Bescheinigung (55) zur Anforderung und Erlangung einer Bescheinigung (55) bei der Organisation (7) aus Mitteln der Übertragung durch das vom Anwender (2) benutzte Mobilfunkgerät (74) bestehen, um eine Bescheinigungsanforderung (56) an die Organisation (7) zu übertragen, wobei die Mittel so ausgelegt sind, dass die Anforderung der Bescheinigung vom Anwender realisiert werden kann:
• durch Aktivieren der Anwendung zur Bescheinigungsanforderung (52) von der SIM-Karte (48),
• durch Eingeben des Passworts (15) auf der Tastatur des Mobilfunk-Datenendgeräts (76),
• durch Zusammenstellen einer Meldung (18), insbesondere des Typs SMS, die die Kennziffer (13) und das Passwort (15) enthält, mittels der Anwendung der Bescheinigungsanforderung (52),
• durch Eingeben eines Signatur-Passworts (51) auf der Tastatur des Mobilfunk-Datenendgeräts (76); wobei das so eingegebene Signatur-Passwort (51) mit dem Signatur-Passwort (51) der SIM-Karte (48) verglichen wird;
wobei das Signatur-Passwort (51) den Signaturmechanismus (53) aktiviert:
- zum Signieren der Meldung (18), und
- zum Erzeugen einer signierten Meldung (59), die sich aus der Meldung (18) und der auf diese Weise erhaltenen Signatur (58) zusammensetzt, indem die persönliche Signaturverschlüsselung (49) benutzt wird, und
- zum Übertragen der signierten Meldung (59) an die Organisation (7);
wobei die Mittel zur Anforderung und Aushändigung der Bescheinigung (55) zur Anforderung und Erlangung einer Bescheinigung (55) bei der Organisation (7) sich ferner zusammensetzen aus:
- Überprüfungsmittel des Servers (39), die von der Organisation (7) angewendet werden zur Überprüfung, ob die so übertragene Kennziffer (13) und das so übertragene Passwort (15) bei der Phase der Registrierung richtig abgespeichert wurden und in die Datenbank (10) der Organisation (7) eingefügt wurden,
- Mittel zur Informationsbearbeitung des Servers (33), die von der Organisation (7) benutzt werden und zum Abrufen der Kenndaten (20) von der Datenbank (10), entsprechend der Kennziffer (13) und des Passworts (15), insbesondere die Nummer und das Verfallsdatum des tragbaren Objekts (1), sowie den Namen und den Vornamen des Inhabers des tragbaren Objekts (1), eingerichtet sind,
- Mittel zur Informationsbearbeitung des Servers (33), die von der Organisation (7) benutzt werden und zum Suchen der der Kennziffer (13) zugeordneten öffentlichen Signaturverschlüsselung (50) eingerichtet sind,
- Mittel zur Informationsbearbeitung des Servers (33), die von der Organisation (7) benutzt werden und zur Überprüfung der Signatur (58) mittels der öffentlichen Signaturverschlüsselung (50) eingerichtet sind;
wobei die Mittel zur Anforderung und Aushändigung der Bestätigung (55), zur Anforderung und Erlangung einer Bescheinigung (55) bei der Organisation (7) sich ferner zusammensetzen aus:
- Herstellungsmittel des Servers (70) zum Herstellen einer Bescheinigung (55) aller oder eines Teils der Kenndaten (20) und der öffentlichen Signatur-Verschlüsselung (50),
- Mittel zur Informationsbearbeitung im Server (33), die von der Organisation (7) benutzt werden und ausgelegt sind zum Abspeichern und Zuordnen der Bescheinigung (55) und eines Bescheinigungshinweis (60) der Bescheinigung (55), zur Kennziffer (13) und zum Passwort (15), in der Datenbank (10) der Organisation (7),
- Übertragungsmittel des Servers (38), die von der Organisation (7) benutzt werden und zum Übertragen des Bescheinigungshinweises (60) und einer Aufforderung zur Aktivierung (61) der Anwendung der Bescheinigungsanforderung (52) an das Mobilfunk-Datenendgerät (25), als Antwort auf die Bescheinigungsanforderung (56), eingerichtet sind,
- das Mobilfunk-Datenendgerät (25), das zur Aktivierung der Anwendung der Anforderung der Bescheinigung (52) ausgelegt ist,
- die Anwendung der Bescheinigungsanforderung (52), die zur Abspeicherung des Bescheinigungshinweises (60) auf der SIM-Karte (48) ausgelegt ist;
wobei das System Mittel zur Übertragung an den Empfänger (44) umfasst, die es dem Anwender (2) ermöglichen, die dem Mobilfunk-Datenendgerät (25) zugeordnete Kennziffer (13) an den Empfänger (23) zu übertragen,
wobei der Server (9) der Organisation (7) ferner umfasst:
- Server-Empfangsmittel (37) zum Empfangen der dem Mobilfunk-Datenendgerät (25) zugeordneten Kennziffer (13) vom Empfänger (23) sowie Informationen, die sich auf die Zahlung (62) beziehen, darunter der Betrag der Zahlung,
- Übertragungsmittel des Servers (38) zum Senden einer Meldung zur Anforderung der Zahlung (63) an das Mobilfunk-Datenendgerät (25) des Anwenders (2) unter Verwendung der dem Mobilfunk-Datenendgerät (25) zugeordneten Kennziffer (13);
wobei die Meldung zur Anforderung der Zahlung (63) die Informationen (62), welche die Zahlung betreffen, und eine Aufforderung zur Aktivierung der Zahlungsanwendung (77) umfasst;
wobei das Mobilfunk-Datenendgerät (25) zur Aktivierung der Zahlungsanwendung (54) ausgelegt ist;
wobei die so aktivierte Zahlungsanwendung (54) zur Anzeige der die Zahlung betreffenden Informationen (62) sowie die auf der SIM-Karte (48) abgespeicherten Bescheinigungshinweise (60) ausgelegt ist;
wobei das Mobilfunk-Datenendgerät (25) dazu ausgelegt ist, dass der Anwender (2) mittels der Tastatur des Mobilfunk-Datenendgeräts (76) im Falle einer Mehrfachwahlmöglichkeit einen Bescheinigungshinweis (60) auswählen kann, anzuwenden, um die Zahlung durchzuführen;
wobei die Anwendung der Zahlung (54) zur Anzeige eines Eingabefeldes (19) des Signatur-Passworts (51) ausgelegt ist, so dass der Anwender (2) seine Zustimmung zur Zahlung durch Eingabe des Signatur-Passworts (51) in das Eingabefeld (19) mittels der Tastatur des Mobilfunk-Datenendgeräts (76) geben kann;
wobei die Anwendung der Zahlung (54) zur Kontrolle durch Vergleich mit dem Signatur-Passwort (51) der SIM-Karte (48);
wobei die Anwendung der Zahlung (54) ausgelegt ist für:
• (i) das Abfassen einer Zahlungsmitteilung (66), insbesondere vom Typ SMS, die den Bescheinigungshinweis (60) und die Zahlungsdaten enthalten, die sich mindestens teilweise aus den Informationen, welche die Zahlung (62) betreffen, zusammensetzen, insbesondere den Betrag der Zahlung, das Datum der Zahlung, einen Hinweis auf die Transaktion, eine Identifizierung des Empfängers (23),
• (ii) das Erzeugen einer Signatur (58) durch Anwenden der privaten Signatur-Verschlüsselung (49),
• (iii) das Erzeugen einer signierten Zahlungsmitteilung (67), die sich aus der Zahlungsmitteilung (66) und der auf diese Weise erhaltenen Signatur (58) zusammensetzt, und
• (iv) das Senden der so erzeugten signierten Zahlungsmitteilung (67) an den Server (9) der Organisation (7) über die Übertragungsmittel des Mobilfunk-Datenendgeräts (74),
wobei die Mittel zur Bearbeitung der Informationen des Servers (33) der Organisation (7) zum Abrufen der Bescheinigung (55) und aller oder eines Teils der Kenndaten (20) aus der Datenbank (10), insbesondere der Nummer und des Verfallsdatums des tragbaren Objekts (1), die der dem Mobilfunk-Datenendgerät (25) und dem Bescheinigungshinweis (60) zugeordneten Kennziffer (13) entsprechen, ausgelegt sind;
wobei die Mittel zur Bearbeitung der Informationen des Servers (33) der Organisation (7) zum Überprüfen der Signatur (58) der signierten Zahlungsmitteilung (67) durch Benutzen der öffentlichen Signatur-Verschlüsselung (50) der Bescheinigung (55) ausgelegt sind;
wobei die Mittel zur Bearbeitung der Informationen des Servers (33) der Organisation (7) zum Überprüfen, ob die Bescheinigung (55) dem Anwender (2) entspricht, der die dem Mobilfunk-Datenendgerät (25) zugeordnete Kennziffer (13) an den Empfänger (23) übertragen hat, und zum Überprüfen, ob die so übermittelte signierte Zahlungsmitteilung (67) der Zahlungsanforderungsmitteilung (63) entspricht, ausgelegt sind;
wobei die Mittel zur Bearbeitung der Informationen des Servers (33) der Organisation (7) ausgelegt sind, um:
• ein dem tragbaren Objekt (1) zugeordnetes Bankkonto mit dem Betrag der Zahlung zu belasten oder belasten zu lassen und einem Bankkonto des Empfängers (23) den Betrag gutzuschreiben oder gutschreiben zu lassen auf,
• dem Empfänger (23) die Fernzahlung des Anwenders (2) zu bestätigen;
so dass die Zahlung vom Anwender (2) fernquittiert wird, ohne dass er dem Empfänger (23) die Kenndaten (20) des tragbaren Objekts (1), insbesondere die Nummer und das Datum des Ablaufens der Bankkarte (5) des Anwenders (2) mitteilen muss.

9. System gemäß Anspruch 8, wobei das System, zusätzlich zu den Mitteln zum Anwenden des fortgeschrittenen Modus, der Gegenstand des Anspruchs 8 ist, einen Grundmodus und einen Vorgang der automatischen Auswahl des geeigneten Modus umfasst; wobei die in der Phase der Registrierung benutzten Mittel des Grundmodus identisch mit den in der Phase der Registrierung des fortgeschrittenen Modus benutzten Mittel sind; wobei die Mittel der Informationsbearbeitung des Servers (33) ausgelegt sind zum Entscheiden, ob die Zahlung gemäß dem fortgeschrittenen Modus ausgeführt werden kann oder ob sie gemäß dem Grundmodus ausgeführt werden muss;
wobei diese Entscheidung während der Zahlungsphase und/oder während des Vorgangs der Anforderung und Auhändigung der Bescheinigung getroffen werden kann; im Falle dass die Zahlung nicht gemäß dem fortgeschrittenen Modus ausgeführt werden kann, werden die beim Vorgang der Anforderung und Aushändigung der Bescheinigung (55) und beim Vorgang der Zahlungsphase des fortgeschrittenen Modus benutzten Mittel durch die nachstehend genauer spezifizierten Mittel für die Zahlung im Grundmodus ersetzt;
das System umfasst ferner Übertragungsmittel an den Empfänger (44), die es dem Anwender (2) ermöglichen, die dem Mobilfunk-Datenendgerät (25) zugeordnete Kennziffer (13) an den Empfänger (23) zu übertragen;
die Server-Empfangsmittel (37) des Servers (9) der Organisation (7) sind ausgelegt zum Empfangen der dem Mobil-Datenendgerät (25) zugeordneten Kennziffer (13) sowie von die Zahlung (62) betreffenden Informationen, darunter den Betrag der Zahlung, vom Empfänger (23);
die Server-Empfangsmittel (37) des Servers (9) der Organisation (7) sind ausgelegt zum Senden einer Eingabemitteilung (75) an den Anwender (2) unter Benutzung der dem Mobilfunk-Datenendgerät (25) zugeordneten Kennziffer (13);
wobei die Eingabemitteilung (75) die Informationen, welche die Zahlung (62) betreffen, und eine Aufforderung zur Eingabe des Passworts (68) umfasst; wobei die Übertragungsmittel des Mobilfunk-Datenendgeräts (74) so ausgelegt sind, dass es dem Anwender (2) ermöglicht wird, das Passwort (15) an den Server (9) der Organisation (7) zurückzusenden;
wobei die Mittel zur Bearbeitung der Informationen des Servers (33) zur Überprüfung in der Datenbank (10) ausgelegt sind, ob das Passwort (15), das vom Anwender (2) übertragen wurde, der vom Empfänger (23) übertragenen, dem Mobilfunk-Datenendgerät (25) zugeordneten Kennziffer (13) entspricht;
wobei die Mittel der Bearbeitung der Informationen des Servers (33) ausgelegt sind zum Suchen aller oder eines Teils der Kenndaten (20) in der Datenbank (10), die der dem Mobilfunk-Datenendgerät (25) zugeordneten Kennziffer (13) und dem Passwort (15) entsprechen;
wobei die Mittel zur Bearbeiung der Informationen des Servers (33) ausgelegt sind, um ein dem tragbaren Objekt (1) zugeordnetes Bankkonto mit dem Betrag der Zahlung zu belasten oder belasten zu lassen und einem Bankkonto des Empfängers (23) den Betrag gutzuschreiben oder gutschreiben zu lassen,
wobei die Mittel der Bearbeitung der Informationen des Servers (33) ausgelegt sind, um dem Empfänger (23) die Fernzahlung des Anwenders (2) zu bestätigen;
so dass die Zahlung vom Anwender (2) fernquittiert wird, ohne dass er dem Empfänger (23) die Kenndaten (20) des tragbaren Objekts (1), insbesondere die Nummer und das Datum des Ablaufens der Bankkarte (5) des Anwenders (2) mitteilen muss.

10. System gemäß Anspruch 9, wobei das System so ausgelegt ist, dass zum Entscheiden, ob die Zahlung gemäß dem fortgeschrittenen Modus ausgeführt werden kann oder gemäß dem Grundmodus ausgeführt werden muss, die Mittel zur Informationsbearbeitung des Servers (33) der Organisation (7) entdecken, ob der Kennziffer (13) eine öffentliche Signatur-Verschlüsselung (50) zugeordnet ist, sei es, dass diese Information vom Mobilfunkbetreiber (69), sei es, dass sie vom Mobilfunk-Datenendgerät (25) kommt;
so dass die Organisation (7), je nach der Option, die sie bevorzugen will:
entweder den Anwender (2) auffordern kann, eine Bescheinigung (55) anzufordern, so dass er auf den fortgeschrittenen Modus zugreifen kann,
oder akzeptieren kann, dass der Anwender (2) weiterhin die Fernzahlungen gemäß dem Grundmodus durchführen kann.

11. System gemäß Anspruch 10, wobei das System so ausgelegt ist, dass die Entdeckung durch diese Informations-Bearbeitungsmittel des Servers (33) während der Zahlungsphase im Grundmodus bei der Übertragung der dem Datenendgerät (25) zugeordneten Kennziffer (13) durch den Empfänger (23) an die Organisation (7) auftritt.

12. System gemäß einem beliebigen der Ansprüche 10 oder 11,
wobei die Mittel zur Bearbeitung der Informationen des Servers (33) ferner Verriegelungsmittel (72) zum Blockieren der Benutzung des Grundmodus umfassen, falls die Organisation (7) entdeckt, dass der Kennziffer (13) eine öffentliche Signatur-Verschlüsselung (50) zugeordnet ist;
so dass der Anwender (2) keine andere Lösung zur Durchführung der Fernzahlung hat, als eine Bescheinigung (55) gemäß dem fortgeschrittenen Modus anzufordern.

13. System gemäß Anspruch 12, wobei die Mittel zur Bearbeitung der Informationen des Servers (33) ferner Kontrollmittel (73) umfassen zum Kontrollieren, ob ein Anwender (2), der eine Bescheinigung (55) anfordert, nicht ein Passwort (15) benutzt, das bereits zur Zahlung im Grundmodus zusammen mit der Kennziffer (13) des Anwenders (2) benutzt wurde,
so dass die Risiken der Aufdeckung der Paßwörter reduziert sind;
so dass die Sicherheitshöhe im fortgeschrittenen Modus optimiert wird.

## Claims

1. Method designed to enable a user (2), having at his disposal a portable object (1) and a mobile terminal (25) having the function of a telephone, to make a distance payment to a recipient (23); said mobile terminal (25) comprising a SIM card (48) customized by a mobile phone operator; said SIM card (48) being associated with said call number (13) of said mobile terminal; said SIM card (48) containing:
• a private signature key (49) corresponding to a public signature key (50),
• a signature password (51); said signature password (51) being either an original signature password (51) determined and transmitted by said telephone operator (69) to said user (2), or a new signature password (51) which said user (2) has substituted to said original signature password (51); said SIM card (48) also including:
• cryptographic functions,
• a certificate requesting application (52) containing a signature mechanism (53) using said private signature key (49),
• a payment application (54),
• an organisation (7) keeping said public signature key (50);
so that the organisation (7) is capable of establishing a link between the call number (13) and the public signature key (50);
said method including an advanced mode containing three phases:
- a registration phase
- a certificate requesting and delivery process
- a payment phase;
during a registration phase of said user with said organisation (7):
- the step, for said user (2) of coupling said portable object (1) with a terminal (8); said terminal (8) being connected directly or indirectly to a server (9) linked with a database (10) of said organisation (7);
said method also including, during said registration phase:
- the step, for said user (2), upon request from said terminal (8) of inputting in said terminal (8) authentication data (11) of said user (2) associated to said portable object (1);
- the step, for said terminal (8) of checking if said authentication data (11) of said user (2), correspond to said portable object (1);
so that the registration phase enables authenticating of the portable object (1) and checking that the user (2) is actually the owner of the portable object (1);
said method also including:
- the phase, for said terminal (8), of reading from said portable object (1) and transmitting to said server (9) identification data (20),
- the step, for said user (2), upon request of said terminal (8), using a keyboard (12) of said terminal (8), of entering the call number (13) corresponding with said mobile terminal (25); said call number (13) corresponding to said mobile terminal (25) being transmitted, by said terminal (8), to said server (9);
said method also including:
- the step, for said terminal (8), of transmitting a password (15) to said user (2); said password (15) having been determined by said server (9) and transmitted to said terminal (8);
so that said password (15) attributed by the server (9) can be transmitted only to said user (2)owning said authenticated portable object (1);
said method also including, during said registration phase:
- the step, for said server (9), of memorizing and associating, in said database (10) of said organisation (7):
• said identification data (20),
• said call number (13) associated with said mobile terminal (25),
• said password (15);
said method also including, to enable said user (2) to request and obtain a certificate (55) from said organisation (7), the following steps:
- the step, for said user (2), of transmitting a certificate request (56) to said organisation (7), the following phases:
• by operating said certificate requesting application (52) of said SIM card(48),
• by entering said password (15) using said mobile terminal keyboard (76),
• by structuring a message (18) containing said call number (13) and said password (15), using said certificate-requesting application (52),
• by entering a signature password (51), using the mobile terminal keyboard (76); said signature password (51) thus entered being compared with said signature password (51) of said SIM card (48);
said signature password (51) activating said signature mechanism (53);
- to produce a signature (58), and
- to produce a signed message (59) composed of said message (18) and said signature (58) thus obtained, using said private signature key (49), and
- to transmit said signed message (59) to said organisation (7);
said method also including, for said organisation (7), the following steps:
- the step of checking if said call number (13) and said password (15) thus transmitted have been correctly memorized during the registration phase and are associated in said database (10) of said organisation (7).
- the step of extracting, from said database (10), said identification data (20), corresponding to said call number (13) and said password (15), for instance the number and expiry date of said portable object (1) as well as the surname and first name of the owner of said portable object (1),
- the step of searching for the public signature key (50) corresponding to said call number (13),
- the step of checking said signature (58) using said public signature key (50):
said method also including:
- the step of producing a certificate (55) using all or part of said identification data (20) and said public signature key (50),
- the step of memorizing and associating said certificate (55) and a certificate reference (60) of said certificate (55) with said call number (13) and said password (15), in said database (10) of said organisation (7),
- the step of transmitting to said mobile terminal (25), in response to the certificate request (56), said certificate reference (60) and an activation request (61) of said certificate order application (52),
- the step, for said mobile terminal (25), of activating said certificate requesting application (52),
- the step, for said certificate requesting application (52), of memorizing said certificate reference (60) on said SIM card;
said method also including, during a payment phase:
- the step, for said user (2), of transmitting to said recipient (23) said call number (13) corresponding to said mobile terminal (25);
- the step, for said recipient (23), of transmitting to said organisation (7) said call number (13) corresponding to said mobile terminal (25) as well as information concerning said payment (62), including the amount of said payment,
- the step, for said organisation (7), of addressing a payment requesting message (63) to said mobile terminal (25) of said user (2), using said call number (13) corresponding to said mobile terminal (25); said payment requesting message (63) including:
• said information concerning said payment (62),
• a request for the activation of the payment application (77),
- the step, for said mobile terminal (25), of activating said payment application (54),
- the step, for said payment application (54) thus activated, of displaying said information concerning said payment (62) as well as said certificate references (60) memorized on said SIM card (48),
- the step, for said user, of selecting, using said mobile terminal keyboard (76), in case of multiple choices, a certificate reference (60) to be used to make said payment,
- the step, for said payment application (54), of displaying an entry field (19) for entering said signature password (51),
- the step, for said user (2), of giving one's consent concerning said payment by entering said signature password (51), into said entry field (19), using said mobile terminal keyboard (76),
- the step, for said payment application (54), of checking said entered password signature (51) by comparing it with said signature password (51) of said SIM card (48),
- the step, for said payment application (54):
• (i) of structuring a payment message (66) containing said certificate reference (60) and payment data, at least partly constituted from said information concerning said payment (62),
• (ii) of signing said payment message (66), using said private signature key (49),
• (iii)of producing a signed payment message (67) composed of said payment message (66) and said signature (58) thus obtained, and
• (iv) of sending back to said organisation (7) said signed payment message (67) thus produced,
- the step, for said organization (7) of extracting from said data base (10), said certificate (55) and all or part of said identification data (20) corresponding to said call number (13) corresponding to said mobile terminal (25) and to said certificate reference (60),
- the step, for said organisation (7), of checking the signature (58) of said signed payment message (67) using said public signature key (50) of said certificate (55),
- the step, for said organisation (7), of checking that said certificate (55) corresponds to said user (2) having transmitted to said recipient (23) said call number (13) corresponding to said mobile terminal (25) and of checking that said signed payment message (67) thus returned corresponds to said payment request message (63),
- the step, for said organisation (7):
• of having a bank account associated with said portable object (1) debited, or debiting it, of the amount of said payment and of having said recipient (23) credited or crediting said recipient (23) with said amount,
• of confirming to said recipient (23) said distance payment from said user (2);
so that the payment is made remotely by the user (2) without him having to communicate identification data (20) of the portable object (1) to the recipient (23).

2. Method according to claim 1; said method including, as well as said advanced mode object of claim 1, a basic mode and an automatic process which selects the appropriate mode; the registration phase of the basic mode being identical to the registration phase of the advanced mode; said automatic selection process including the step of determining whether said payment can be made according to said advanced mode or if it has to be made according to said basic mode; said determination being able to be carried out during said payment phase and/or during the certificate request and delivery process (55);
in the case of said payment not being able to be made according to said advanced mode, the steps of the certificate delivery request process (55) and the steps of the payment phase of said advanced mode are replaced with the following steps of said basic mode, during the payment phase:
- the step, for said user (2), of transmitting to said recipient (23) said call number (13) corresponding to said mobile terminal (25),
- the step, for said recipient (23) of transmitting to said organisation (7) said call number (13) corresponding to said mobile terminal (25) as well as information concerning said payment (62), including the amount of said payment,
the step, for said organization (7) of addressing to said user (2) an entry message (75) using said call number (13) corresponding to said mobile terminal (25); said entry message (75) including:
• said information concerning said payment (62),
• a request for entering said password (68) into said entry message (75),
- the step, for said user (2), of transmitting in return said password (15) to said organisation (7),
- the step, for said organisation (7), of checking in database (10) whether said password (15), transmitted by said user (2), corresponds to said call number (13) corresponding to said mobile terminal (25) transmitted by said recipient (23),
- the step, for said organisation (7):
• of searching, in said database (10), all or part of said identification data (20) corresponding to said call number (13) corresponding to said mobile terminal (25) and to said password (15),
• of having debited or debiting a bank account associated with said portable object (1) of the amount of said payment and having said recipient (23) credited or crediting him with said amount,
• of confirming with said recipient (23) said distance payment of said user (2);
so that the payment is made remotely by the user (2) without him having to communicate identification data (20) of the portable object (1), for instance the number and expiry date of the user's (2) bank card (5) to the recipient (23).

3. Method according to claim 2; said method being such that in order to determine if said payment may be made according to said advanced mode or if it has to be made according to said basic mode, said organisation (7) detects that a public signature key (50) is associated to said call number (13), this information coming either from said telephone operator (69) or from said mobile terminal (25);
so that said organisation (7) may, depending on the options which it intends to prioritize:
either invite said user (2) to request a certificate (55) so that he may have access to said advanced mode,
or accept that said user (2) may continue to make distance payments according to said basic mode.

4. Method according to claim 3; said method being such that said detection comes into play, during said payment phase in basic mode, during the transmission by said recipient (23) to said organisation (7) of said call number (13) corresponding to said mobile terminal (25).

5. Method according to any of claims 3 or 4; said process also including the step for said organisation (7) of blocking the launch of said basic mode in the case where said organisation (7) detect that a public signature key (50) is associated to said call number (13);
so that said user (2) has no other distance payment solution than to request a certificate (55) according to said advanced mode.

6. Method according to claim 5; said method also including the step, for said organisation (7), of checking that a user (2) requesting a certificate (55) is not using a password (15) which has already been used for payment in basic mode in association with said call number (13) of said user (2);
so that the risks of compromising passwords are reduced;
so that the security level is optimized in advanced mode.

7. Method according to any of the preceding claims, in which, during the registration phase, the step for the terminal (8) of transmitting a password (15) to the user (2) includes displaying the password (15) on a screen (16) of the terminal (8) and/or delivering to said user (2) a ticket (17) on which said password (15) is printed.

8. System designed to enable a user (2) having at his disposal a portable object (1) and a mobile terminal (25) having the function of a telephone, to make a distance payment to a recipient (23);
said system being such that it enables an advanced mode including three phases:
- a registration phase
- a certificate (55) requesting and delivery process
- a payment phase;
said system including, to enable the registration of said user (2) with an organisation (7):
- a terminal (8) including means of coupling (26) enabling said user (2), to couple said portable object (1) with said terminal (8),
- a server (9) connected to a database (10) of said organisation (7);
said server (9) including means of connection (27) to connect, directly or indirectly, said terminal (8) to said server (9) via a communication network (28);
said terminal (8) also including:
- a user-terminal interface (29) enabling said user (2) to enter said user's (2) authentication data (11) of said user into said terminal (8) upon request of said terminal (8),
- means of terminal verification (30) to check that said authentication data (11) of said user (2) corresponds to said portable object (1);
so that the registration phase enables authenticating of the portable object (1) and checking that the user (2) is actually the owner of the portable object (1);
said terminal (8) also including:
- means of terminal reading (43) enabling the reading of identification data (20) from said portable object (1).
- means of terminal transmission (31) enabling the transmission of said identification data (20) to said server (9) ;
said means of terminal reading (43) and said means of terminal transmission (31) coming into play during the registration phase of said user (2);
said terminal (8) being such that said user-terminal interface (29) includes a keyboard (12), enabling the user (2) to enter, on request of said terminal (8) the call ,number (13) corresponding to said mobile terminal (25);
said terminal (8) including:
- means of terminal transmission (31) for transmitting said call number (13) corresponding to said mobile terminal (25) to said server (9),
- means of terminal communication (32) for communicating a password (15) to said user (2);
said password (15) having been determined by said server (9) by means of server computational processing (33); said password (15) having been transmitted by said server (9) to said terminal (8), via said communication network (28);
so that said password (15) attributed by the server (9) can be transmitted only to said user (2) owning said authenticated portable object (1);
said means of server computational processing (33) including means of registration (34) for memorizing and associating in said database (10):
• said identification data (20),
• said call number (13) corresponding to said mobile terminal (25),
• said password (15);
said system also including means of requesting and delivering certificate (55) which may be employed by said user (2) and said organisation (7) in the case where said mobile terminal (25) contains a SIM card (48) customized by a mobile telephone operator (69); said SIM card corresponding to said call number (13) of said mobile terminal (25), said SIM card (48) containing:
• a private signature key (49) corresponding to a public signature key (50),
• a signature password (51); said signature password (51) being either an original signature password (51) which said telephone operator (69) has determined and transmitted to said user (2), or a new signature password (51) which said user (2) has substituted to said original signature password (51);
said SIM card (48) also including:
• cryptographic functions,
• a certificate request application (52) containing a signature mechanism (53) using said private signature key (49),
• a payment application (54);
said organisation (7) keeping said public signature key (50);
so that the organisation (7) is capable of establishing a link between the call number (13) and the public signature key (50);
said means of requesting and delivering certificates (55) for requesting and obtaining a certificate (55) from said organisation (7) being composed of means of mobile terminal transmission (74), employed by said user (2), for transmitting a certificate request (56) to said organisation (7), these means being such that the certificate request may be carried out by the user:
• by using said certificate requesting application (52) of said SIM card (48),
• by entering said password (15) into said keyboard of the mobile terminal (76),
• by structuring, using said certificate request application (52), a message (18), for instance a text message, containing said call number (13) and said password (15),
• by entering a signature password (51) using said mobile terminal keyboard (76); said signature password (51) thus entered being compared to said signature password (51) of said SIM card (48);
said signature password (51) activating said signature mechanism (53):
- to sign said message (18), and
- to produce a signed message (59) composed of said message (18) and of the signature (58) thus obtained, using said private signature key (49), and
- to transmit said signed message (59) to said organisation (7);
said means of requesting and delivering certificate (55), to request and obtain a certificate (55) from said organisation (7), also including:
- server verification means (39) used by said organisation (7), to check if said call number (13) and said password (15) thus transmitted have been memorized during the registration phase and have been associated, in said database (10) of said organisation (7),
- said means of server computational processing (33) used by said organisation (7) and designed to extract, from said database (10), said identification data (20), corresponding to said call number (13) and said password (15), for instance the number and the expiry date of said portable object (1) as well as the surname and first name of the owner of said portable object (1),
- said means of server computational processing (33) used by said organisation (7) and designed to search for the public signature key (50) corresponding to said call number (13),
- said means of server computational processing (33) used by said organisation (7)and designed to check said signature (58) using said public signature key (50);
said means of requesting and delivering certificate (55) for requesting and obtaining a certificate (55) from said organism (7), also including:
- server production means (70) for producing a certificate (55)entirely or partly from said identification data (20) and said public signature key (50),
- said means of server computational processing (33) used by said organisation (7) and designed to memorize and associate with said call number (13) and said password (15), in said database (10) of said organisation (7), said certificate (55) and a certificate reference (60) of said certificate (55),
- said means of server transmission (38) used by said organisation (7) and designed to transmit to said mobile terminal (25), in response to the certificate request (56), said certificate reference (60) and a request for activation (61) of said certificate requesting application (52),
- said mobile terminal (25) designed to activate said certificate requesting application (52),
- said certificate requesting application (52) designed to memorize said certificate reference (60) in said SIM card (48);
said system including means of recipient transmission (44) enabling said user (2) to transmit to said recipient (33) said call number (13) corresponding to said mobile terminal (25) ;
said server (9) of said organisation (7) also including:
- means of server reception (37) to receive from said recipient (23) said call number (13)corresponding to said mobile terminal (25) as well as information relative to said payment (62), including the amount of said payment,
- means of server transmission (38) for addressing to said mobile terminal (25) of said user (2) a payment request message (63) using said call number (13) corresponding to said mobile terminal (25);
said payment demand message (63) including said information relative to said payment (62) and a request for the activation of the payment application (77);
said mobile terminal (25) being designed to activate said payment application (54);
said payment application (54) thus activated being designed to display said information relative to said payment (62) as well as said certificate references (60) memorized on said SIM card (48);
said mobile terminal (25) being designed so that said user (2) may select, using said mobile terminal keyboard (76), in case of multiple choices, a certificate reference (60) to be used to carry out said payment;
said payment application (54) being designed to display an entry field (19) for entering said signature password (51) so that said user (2) may give his agreement concerning said payment by entering said signature password (51) into said entry field (19) using said mobile terminal keyboard (76);
said payment application (54) being designed to check said signature password (51)thus entered by comparing it to said signature password (51) of said SIM card (48);
said payment application (54) being designed to:
• (i) structure a payment message (66), for instance of a text message, containing said certificate reference (60) and payment data, at least partly constituted from said information concerning said payment (62), for instance the amount of said payment, the date of said payment, a transaction reference, an identification of said recipient (23),
• (ii) produce a signature (58) using said private signature key (49),
• (iii) produce a signed payment message (67) composed of said payment message (66) and said signature (58) thus obtained, and
• (iv) send back to said server (9) of said organisation (7), via said mobile terminal transmission means (74), said signed payment message (67) thus produced;
said means of server computational processing (33) of said organisation (7) being designed to extract from said database (10), said certificate (55) and all or part of said identification data (20), for instance said number and said expiry date of said portable object (1), corresponding to said call number (13) corresponding to said mobile terminal (25) and to said certificate reference (60);
said means of server computational processing (33) of said organisation (7) being designed to check said signature (58) of said signed payment message (67) using said public signature key (50) of said certificate (55);
said means of server computational processing (33) of said organisation (7) being designed to check if said certificate (55) corresponds to said user (2) having transmitted to said recipient (23) said call number (13) corresponding to said mobile terminal (25) and to check if said signed payment message (67) thus returned corresponds to said distance demand message (63);
said means of server computational processing (33) of said organisation (7) being designed to:
• have debited or debit a bank account associated with said portable object (1) of the amount of said payment and have credited or credit said recipient (23) of said amount,
• confirm with said recipient (23) said distance payment of said user (2);
so that the payment is made remotely by the user (2) without him having to communicate to the recipient (23) the identification data (20) of the portable object (1), for instance the number and the expiry date of the user's (2) bank card (5).

9. System according to claim 8; said system including, as well as means of activating said advanced mode being the object of claim 8, a basic mode and an automatic selection process of the appropriate mode; said means used during the registration phase in basic mode being identical to means used during the registration phase of the advanced mode; said means of server computational processing (33) being designed to determine if said payment may be made according to said advanced mode or if it has to be made according to basic mode; said determination being able to be carried out during said payment phase and / or during the certificate requesting and delivery process (55); in the case of said payment not being able to be made according to said advanced mode, said means employed during the certificate request and delivery request process (55) and during the payment phase process of said advanced mode being substituted for the means specified below, particularly designed for payment in basic mode;
said system also includes means of recipient transmission (44) enabling said user (2) to transmit to said recipient (23) said call number (13) corresponding to said mobile terminal (25);
said means of server reception (37) of said server (9) of said organisation (7) are designed to receive from said recipient (23) said call number (13) corresponding to said mobile terminal (25) as well as information concerning said payment (62), including the amount of said payment;
said means of server reception (37) of said server (9) of said organisation (7) are designed to address to said user (2) an entry message (75) using said call number (13) corresponding to said mobile terminal (25);
said entry message (75) including said information concerning said payment (62) and a request to enter said password (68); said means of mobile terminal transmission (74) being designed to enable said user (2) to transmit in return said password (15) to said server (9) of said organisation (7);
said means of server computational processing (33) being designed to check in said database (10) that said password (15), transmitted by said user (2) corresponds to said call number (13) corresponding to said mobile terminal (25) transmitted by said recipient (23);
said means of server computational processing (33) being designed to search said database (10) for all or a part of said identification data (20) corresponding to said call number (13) corresponding to said mobile terminal (25) and to said password (15);
said means of server computational processing (33) being dsigned to have debited or debit a bank account associated with said portable object (1) of the amount of said payment and to have credited or credit said recipient (23) of said amount;
said means of server computational processing (33) being designed to confirm with said recipient (23) said distance payment by said user (2);
so that the payment is made remotely by the user (2) without him having to communicate to the recipient (23) the identification data (20) of the portable object (1), for instance the number and expiry date of user's (2) bank card (5).

10. System according to claim 9; said system being such that to determine if said payment may be made according to advanced mode or if it has to be made according to basic mode, said means of server computational processing (33) of said organisation (7) detect if a public signature key (50) corresponds to said call number (13) this information coming either from said telephone operator (69), or from said mobile terminal (25);
so that said organisation (7) may, depending on the options it wishes to prioritize:
either invite said user (2) to request a certificate (55) so that he may have access to said advanced mode,
or accept that said user (2) may continue making distance payments using basic mode.

11. System according to claim 10; said system being such that said detection by said server computational processing means (33) comes into play, during said payment phase in basic mode, during the transmission by said recipient (23) of said call number (13) corresponding to said mobile terminal (25) to said organisation (7).

12. System according to either one of claims 10 or 11; said means of server computational processing (33) also including means of locking (72) in order to block the employment of said basic mode in the case of said organisation (7) detecting that a public signature key (50) is associated with said call number (13);
so that said user (2) has no other solution to carry out distance payments than to request a certificate (55) using advanced mode.

13. System according to claim 12; said means of server computational processing (33) also including means of control (73) to check that a user (2) requesting a certificate (55) is not using a password (15) having already been used for payment in basic mode in association with said call number (13) of said user (2);
so that the risks of compromising passwords are reduced;
so that the security level is optimized in advanced mode.
